# EUROPEAN PATENT APPLICATION

(11) **EP 4 545 906 A1**
(43) Date of publication of application: **30.04.2025**
(21) Application number: 24824481.6
(22) Date of filing: 30.08.2024
(51) Int. Cl.: G01B 21/00, G05B 19/4093, B23K 26/70

(54) **MACHINING AREA MEASUREMENT METHOD, COMPUTER NUMERICAL CONTROL MACHINE, AND COMPUTING SYSTEM AND MEDIUM**

(30) Priority: 16.11.2023 CN 202311543314; 28.08.2023 CN 202311092297; 18.06.2024 CN 202410787060; 19.10.2023 CN 202311362024
(71) Applicant: Makeblock Co., Ltd., Shenzhen, Guangdong 518000 (CN)
(72) Inventor: WU, Shiling, Shenzhen Guangdong 518000 (CN); YANG, Chen, Shenzhen Guangdong 518000 (CN); YU, Yangfan, Shenzhen Guangdong 518000 (CN); ZHAN, Xiaohong, Shenzhen Guangdong 518000 (CN)
(74) Representative: Studio Torta S.p.A.
(86) International application number: PCT/CN2024/115913
(87) International publication number: WO 2025/045210

(57) **Abstract**

The present application provides a method of measuring a machined region, a computer numerical control machine, system and medium, the method includes: obtaining a coordinate of at least one measurement point, where the coordinate of the at least one measurement point corresponds to a target position on a surface of a machined material; determining a machined region based on the coordinate of the at least one measurement point; and controlling a target page to display the machined region. The method provided by the present application helps to accurately and higher efficiently machine the machined material.

## Description

### CROSS-REFERENCE TO RELATED APPLICATIONS

The present application claims priorities to Chinese Application No. 2023110922974, titled "Method of Measuring Machined Region, Apparatus, Medium and Machining system", filed on August 28, 2023; Chinese Application No. 2023113620247, titled "Method for Achieving Machining Alignment, Numerical Control Machine, System and Readable Storage Medium", filed on October 19, 2023; Chinese Application No. 2023115433141, titled "Method for Achieving Machining Alignment, Numerical Control Machine, System and Readable Storage Medium", filed on November 16, 2023; and claims 6 to 9 in Chinese Application No. 2024107870606, titled "Machining Alignment Method and Device", filed on June 18, 2024; the entire contents of which are incorporated herein by reference in their entirety.

### TECHNICAL FIELD

The present application relates to the field of machining technology, specifically to a method of measuring a machined region, a computer numerical control machine, a computing system, and a computer-readable storage medium.

### BACKGROUND

Most of the laser device on the market today is equipped with a camera. The camera takes pictures of the to-be-machined material, the position of each point of the to-be-machined material relative to the machining table of the laser device is determined, to obtain a region corresponding to a current position of the to-be-machined material on the target page, and to further determine the to-be-machined region on the to-be-machined material (the machined region) on the target page. It is difficult for the laser machining device not equipped with a camera to accurately identify the machined region because the operator usually makes a general judgment of the machined region based on experience.

### SUMMARY

In order to solve the above technical problems, embodiments of the present application provide a method of measuring a machined region, a computer numerical control machine, a computing system, and a computer-readable storage medium, and embodiments provided by the present application can accurately identify the machined region.

According to an aspect of the embodiments of the present application, the present application provides a method of measuring a machined region, which includes:
obtaining a coordinate of at least one measurement point, where the coordinate of the at least one measurement point corresponds to a target position on a surface of a machined material;
determining a machined region based on the coordinate of the at least one measurement point; and
controlling a target page to display the machined region.

According to an aspect of the embodiments of the present application, the present application provides a computer numerical control machine, which includes:
a movable head and a light emitting assembly;
a communication assembly, configured to receive a machining file, wherein the machining file is generated based on the machined region obtained by the method as claimed in any one of claims 1-14; and configured to receive a signal corresponding to the specific display position obtained by the method as claimed in any one of claims 15-28; and
a controller, configured to control the movable head to machine material based on the machining file, and control the light emitting assembly to emit light to indicate the specific display position based on the signal corresponding to the specific display position.

According to an aspect of the embodiments of the present application, the present application provides a computing system, including at least one computer numerical control machine and at least one processor;
where the processor is configured to perform any one of methods as mentioned above; the computer numerical control machine is configured to transmit electromagnetic energy to machined material arranged inside the computer numerical control machine based on the machined region obtained by the processor, and transmit the electromagnetic energy to a machined object arranged inside the computer numerical control machine based on the specific display position of the machined pattern.

According to an aspect of the embodiments of the present application, the present application provides a computer-readable storage medium, on which computer-readable instructions are stored, where the computer-readable instructions, when executed by a processor of a computer, cause the computer to perform any one of methods as mentioned above.

The technical solution provided in embodiments of the present application is applied to a machining system. The machining system may be a machining device (e.g., a laser machining device), or a machining device and a host computer. The machining system is configured to machine the surface of the machined material. Specifically, based on a target position on the surface of the machined material, a coordinate of the at least one measurement point corresponding to the target position is obtained, and subsequently, based on the coordinate of the at least one measurement point, the determined machined region is finally determined on the target page, so that a user can observe the determined machined region on the target page, and the corresponding machined region can be accurately determined for the laser machining device not equipped with the camera, thereby contributing to accurately and higher efficiently machine the machined material.

Other features and advantages of the present application will become apparent through the following detailed description, or will be learned in part through the practice of the present application.

It should be understood that the above general description and the detailed description that follows are merely exemplary and do not limit the present application.

### BRIEF DESCRIPTION OF THE DRAWINGS

The foregoing and other objects, features, and advantages of the present application will become more apparent by describing in detail exemplary embodiments thereof with reference to the accompanying drawings.
FIG. 1 is a schematic diagram of a system architecture to which a method of measuring a machined region is applied according to embodiments of the present application.
FIG. 2 is a flowchart of the method of measuring the machined region according to embodiments of the present application.
FIG. 3 is a flowchart of the method of measuring the machined region according to embodiments of the present application.
FIG. 4 is a schematic diagram of an interface of the method of measuring the machined region according to embodiments of the present application.
FIG. 5 is a flowchart of the method of measuring the machined region according to embodiments of the present application.
FIG. 6 is a flowchart of the method of measuring the machined region according to embodiments of the present application.
FIG. 7 is a flowchart of the method of measuring the machined region according to embodiments of the present application.
FIG. 8 is a flowchart of determining a vertex according to embodiments of the present application.
FIG. 9 is a flowchart of the method of measuring the machined region according to embodiments of the present application.
FIG. 10 is a schematic diagram of an interface for determining the machined region by the method of measuring the machined region according to an embodiment of the present application.
FIG. 11 is a flowchart of the method of measuring the machined region according to embodiments of the present application.
FIG. 12 is a schematic diagram of an interface for determining the machined region by the method of measuring the machined region according to an embodiment of the present application.
FIG. 13 is a flowchart of the method of measuring the machined region according to embodiments of the present application.
FIG. 14 is a flowchart of an interface for determining the machined region on the target page according to embodiments of the present application.
FIG. 15 is a flowchart of an interface where a machining element is within a machined region on a target page according to an embodiment of the present application.
FIG. 16 is a flowchart of an interface where a machined region cannot be determined on a target page according to an embodiment of the present application.
FIG. 17 is an another system architecture applied by embodiments of the present application.
FIG. 18 is a flowchart of a method for achieving a machining alignment according to embodiments of the present application.
FIG. 19 is a flowchart of determining a position of the starting auxiliary point of a machined pattern according to an embodiment of the present application.
FIG. 20 is a flowchart of obtaining the position of the starting auxiliary point based on position information of the light source according to an embodiment of the present application.
FIG. 21 is a flowchart of drawing a secondary auxiliary point according to an embodiment of the present application.
FIG. 22 is a flowchart of placing a machined pattern according to an embodiment of the present application.
FIG. 23 is a schematic diagram of drawing a rectangle based on a mapping line segment according to an embodiment of the present application.
FIG. 24 is a schematic diagram of placing the machined pattern in the rectangle according to an embodiment of the present application.
FIG. 25 is a flowchart of drawing a mapping pattern according to an embodiment of the present application.
FIG. 26 is a flowchart of cleaning up mapping points according to an embodiment of the present application.
FIG. 27 is a flowchart of indicating a specific display position of a machined pattern based on a relative position relationship of the mapping point and the machined pattern, according to an embodiment of the present application.
FIG. 28 is a flowchart of indicating an specific display position of a machined pattern based on a relative position relationship of a mapping point and a machined pattern, according to an embodiment of the present application.
FIG. 29 is a flowchart of a hardware of a numerical control machine according to an embodiment of the present application.
FIG. 30 is a flowchart of a machining light source and an alignment light source according to an embodiment of the present application.
FIG. 31 is a flowchart of constructing an error compensation formula according to an embodiment of the present application.
FIG. 32 is a flowchart of a machining light spot not overlapped with an alignment light spot according to an embodiment of the present application.
FIG. 33 is a flowchart of performing error compensation for the alignment light spot according to an embodiment of the present application.
FIG. 34 is a flowchart of a device for measuring the machined region according to an embodiment of the present application.
FIG. 35 is a hardware structure diagram of an apparatus for measuring the machined region according to an embodiment of the present application.

### DETAILED DESCRIPTION OF THE EMBODIMENTS

Embodiments will now be described more fully with reference to the accompanying drawings. However, the embodiments can be implemented in a variety of forms and should not be construed as being limited to the examples set forth herein; rather, the provision of these embodiments allows for the description of the present application to be more comprehensive and complete and conveys the idea of embodiments in a comprehensive manner to those skilled in the art. The accompanying drawings are only schematic illustrations of the present application and are not necessarily to scale. Identical accompanying symbols in the drawings indicate identical or similar portions, and thus repetitive descriptions of them will be omitted.

In addition, the features, structures, or characteristics described may be combined in one or more embodiments in any suitable manner. In the following description, many specific details are provided thereby giving a full understanding of the embodiments of the present application. However, those skilled in the art will realize that it is possible to practice the technical embodiments of the present application and omit one or more of the particular details described, or that other methods, groups of elements, steps, etc. may be employed. In other cases, the publicly known structures, methods, implementations, or operations are not shown or described in detail to avoid overshadowing and obscuring aspects of the present application.

Some of the block diagrams shown in the accompanying drawings are functional entities that do not necessarily have to correspond to physically or logically separate entities. These functional entities may be implemented in software form, or in one or more hardware modules or integrated circuits, or in different networks and/or processor devices and/or microcontroller devices.

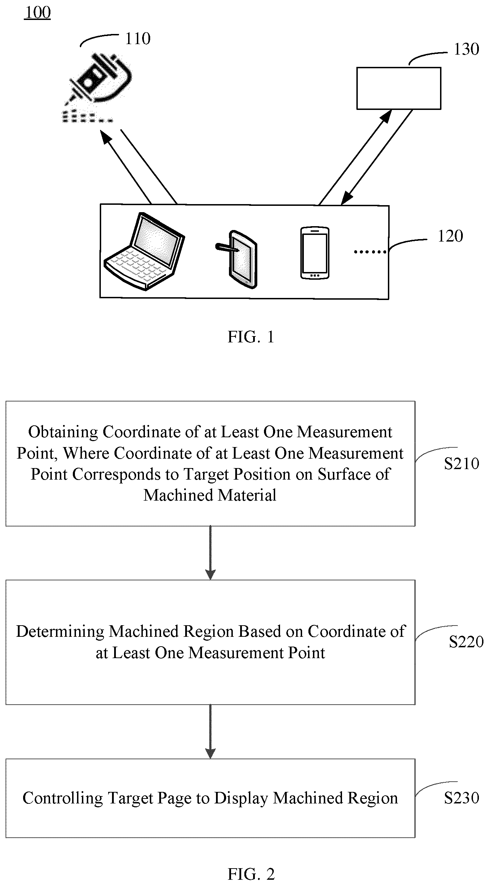

Referring to FIG. 1, FIG. 1 is a schematic diagram of an architecture applied by embodiments of the present application. The architecture 100 may include: a moveable head 110, a communication medium 120, and a software 130. The moveable head is a mechanical module included in a machining device and is not equivalent to a machining device. The moveable head may include a laser head, a knife-cutting head, a plasma-cutting head, a water-gun head, a drill head, a pen head, etc., which is not uniquely limited herein. The communication medium 120 may be a smart device such as a walkie-talkie, a cell phone, a tablet computer, and a mobile internet device that at least supports data communication via the 3rd Generation Partnership Project (3GPP). The communication medium 120 is mounted with a software 130, through which a target page can be presented. The removable head 110 and the communication medium 120 may be connected to each other via a wireless communication link, thereby achieving wireless data communication interaction, or a wired communication link or fiber optic cable, etc. may be utilized, which is not limited in the present application.

It should be understood that the number of communication mediums 120 in FIG. 1 is merely illustrative. There may be any number of communication mediums 120 as needed for implementation.

Some of the technical solutions of the embodiments of the present application may be specifically implemented based on the architecture as shown in FIG. 1 or a deformed architecture thereof.

Referring to FIG. 2, FIG. 2 is a flowchart of a method of measuring a machined region according to embodiments of the present application. The method may be applicable to the architecture shown in FIG. 1, for example, may be specifically performed by the communication medium 120. Of course, the method may also be applicable to other architectures, which is not limited in this embodiment.

As shown in FIG. 2, the method includes:
Step S210, obtaining a coordinate of at least one measurement point, where the coordinate of the at least one measurement point corresponds to a target position on a surface of a machined material.
Step S220, determining a machined region based on the coordinate of the at least one measurement point.
Step S230, controlling a target page to display the machined region.

These three steps are described in detail below.

In step S210, the machined material may include, but is not limited to, a planar material or a cylindrical material, the planar material such as a wooden board, an acrylic board, etc., and the cylindrical material such as a wooden stick, a cup, etc., and the machined material may be differentiated according to whether the surface of the machined material is a two-dimensional planar surface or a three-dimensional curved surface with curvature. The target position is a position intended to position on the surface of the machined material.

The at least one target position is set on the surface of the machined material based on the desired machining effect, exemplarily, taking a cell phone case as the machined material, if a small pattern is desired to be machined on the cell phone case, the at least one target position is set on the cell phone case according to the shape and position of the small pattern. If the entire cell phone case is desired to be machined, the at least one target position is set on the cell phone case according to the overall shape of the cell phone case.

After at least one target position is set on the surface of the machined material, the movable head is moved to the position of the measurement point for marking respectively, at this time, the position coordinates of the movable head are the target positions. Exemplarily, three target positions are set on the surface of the machined material as points A, B, and C. The movable head is moved to point A and then the position coordinate is marked, the movable head is subsequently moved to point B and then the position coordinate is marked, and the movable head is finally moved to point C and then the position coordinate is marked. It is to be noted that the marker may be performed in no fixed order, and in addition to the above order of marking position coordinates, it is also possible to mark point B, point A, and point C sequentially, or to mark point C, point A, and point B sequentially, and so on. The target position is marked by the movable head, so that the corresponding the coordinate of the at least one measurement point can be obtained.

As can be seen from the above, the present embodiment can mark the position coordinates in a different order after the machined material indicates that the target position is set, thereby enhancing the operator's freedom to mark the position coordinates.

In an exemplary embodiment, the machining system includes a movable head, the movable head is configured to move to machine the surface of the machined material, and configured to eject the positioning light spot, and before the step S210 of obtaining the coordinate of the at least one measurement point, the coordinate of the measurement point corresponding to the target position on the surface of the machined material, the method further includes:
Step S310, driving the movable head to move to correspond the positioning light spot to the target position on the surface of the machined material.

Further illustrated, a movable head is mounted in the machining system applied in an embodiment of the present application. A machining member of the movable head may be configured to machine the surface of the machined material, and a positioning member of the movable head may be configured to eject the positioning light spot.

Driving the movable head to move includes, but is not limited to, moving the movable head by handholding the movable head, and controlling the movable head to move in accordance with the instructions issued from the machining system, etc. By driving the movable head to move, the positioning light spot emitted from the positioning member of the movable head corresponds to a position where it wants to position on the surface of the machined material.

As can be seen from the above, the positioning light spot emitted by this embodiment can effectively help the operator to know the position of positioning on the surface of the machined material at this moment.

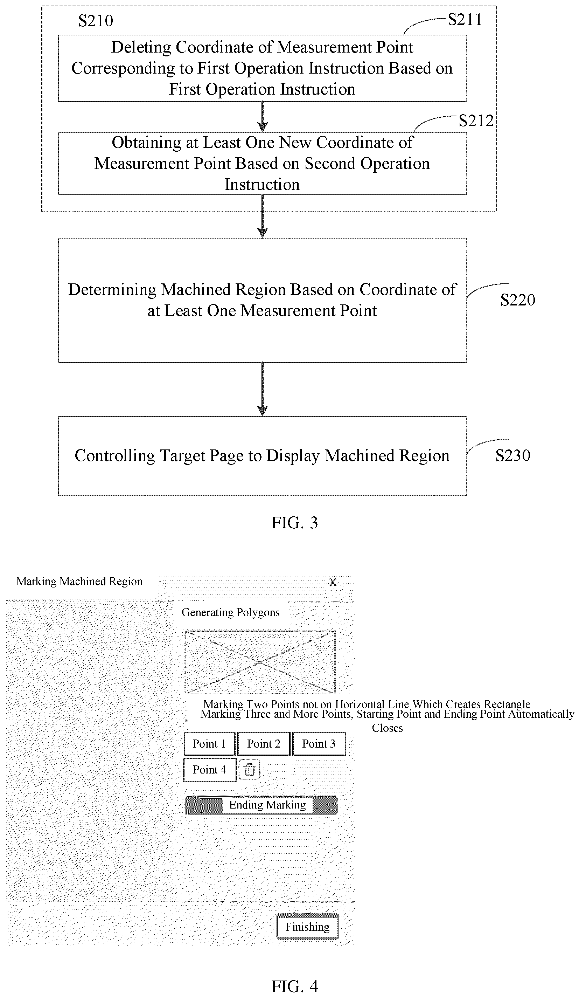

Referring to FIG. 3, FIG. 3 is a flowchart of a method of measuring the machined region according to an embodiment of the present application. A step S210 of obtaining the coordinate of the at least one measurement point, the coordinate of the measurement point corresponds to a target position on a surface of the machined material includes:
Step S211, deleting a coordinate of the measurement point corresponding to the first operation instruction based on the first operation instruction; and/or
step S212, obtaining at least one new coordinate of the measurement point based on the second operation instruction.

These two steps are described in detail below.

In step S212, the second operation instruction may be automatically triggered by the user or the smart device, or may be triggered by the user clicking a virtual button in the interaction page displayed by the host computer, or may be triggered by the user clicking a physical button on the laser machining device, which is not limited in the present application.

In step S211, the first operation instruction may be triggered by the user clicking the virtual button in the interaction page displayed by the host computer, or may be triggered by the user clicking the physical button on the laser machining device, which is not limited herein.

For example, referring to FIG. 4, which is a schematic diagram of an interface of the method of measuring the machined region provided by an embodiment of the present application, marking points corresponding to existing measurement points can be displayed on a preview page or a target page (multiple marking points can be arranged in the marking orders, and the user can see the relative position relationship of the points), and the user can click the virtual buttons and marking points on the page which represent deletion, the selected marking points are deleted.

In step S220, the machined region may include, but is not limited to, a regular region and a non-regular region, the regular region is, for example, a rectangle, a circle, a triangle, etc., and the non-regular region is, for example, an ellipse, a polygon, etc., which cannot be clearly defined.

The at least one measurement point includes one or more measurement points.

When the at least one measurement point is one measurement point, the machined region may be determined based on a preset determination method, and the specific preset determination method in not limited by the present application .

Exemplarily, if the coordinate of the measurement point is (0, 0), and the preset determination method is to make a circle with a radius of 5 and with the measurement point as the center, the machined region can thus be determined to be a circle with the circle center of (0, 0) and the radius of 5. For the circular machined region, it can also be determined based on two measurement points, for example, the diameter of the circle is determined based on two measurement points, and the midpoint of the diameter is taken as the center of the circle, which in turn delineates the circular machined region. For example, the first measurement point is taken as the center of the circle, and the radius is determined based on the distance of the second measurement point from the first measurement point, which in turn delineates the circular machined region; or, for example, the first measurement point is taken as a point on the boundary of the circle, and the second measurement point is taken as the center of the circle. The second measurement point is used as the center of the circle, and the distance between the second measurement point and the first measurement point is used to determine the radius, which in turn delineates the circular machined region. The circular machined region can be determined in a variety of ways, which is not uniquely defined here.

If the coordinate of the measurement point is (0, 0), and the preset determination method is to make a square with a side length of 5 whose side is parallel to the coordinate axis and with the measurement point as its center point, then the machined region can be thereby determined as the square with a side length of 5 whose side is parallel to the coordinate axis and whose center is at (0, 0).

As can be seen from the above, the present embodiment can determine the machined region by determining at least one measurement point, thereby simplifying the operation process of the operator and thus improving the efficiency of determining the machined region.

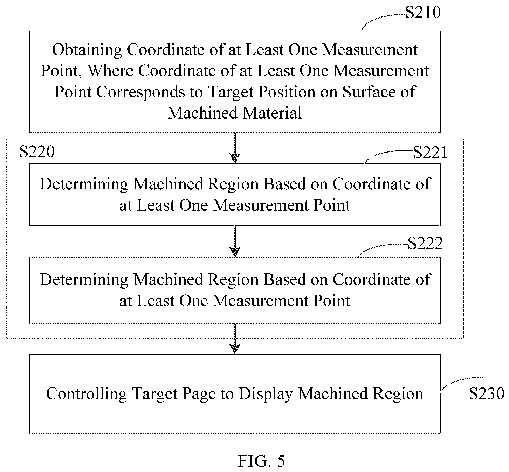

When the at least one measurement point includes two or more measurement points, referring to FIG. 5, which is a flowchart of the method of measuring the machined region according to an embodiment of the present application. The step S220 of determining the machined region based on the coordinate of the at least one measurement point includes:
Step S221, determining at least one line segment based on the coordinates of more than two measurement points; and
Step S222, determining the machined region based on the at least one line segment.

These two steps are described in detail below.

In step S221, when there are two measurement points, one line segment may be determined based on coordinates of more than two measurement points. When there are three or more measurement points, at least one line segment may also be determined based on coordinates of three or more measurement points. Thus, at least one line segment may be determined based on coordinates of more than two measurement points.

In step S222, similarly, the machined region is determined based on the preset determination method, the specific preset determination method is not limited in the present application.

Exemplarily, if two endpoints of the line segment are (-2, 0) and (2, 0), and the preset determination method is to use the two endpoints as points on the circle and the midpoint of the two endpoints as the center of the circle, the machined region can thus be determined to be a circle with the center of the circle at (0, 0) and the radius of 2. If the two endpoints of the line segment are (-2, 0) and (2, 0), and the preset determination method is to take two endpoints of the line segment as neighboring vertices of the square, then the machined region can be determined to be a square with a side length of 4, which can be either above the x-axis or below the x-axis, and there is no unique limitation herein. In addition, the preset determination method may be that the line segment connecting (-2, 0) and (2, 0) is used as the axis of the machined region and the machined region is a square with a side length of 4, so that the machined region can be determined to be a square centered at (0, 0) and with a side length of 4.

In step S230, the target page may be a page on the machining system or on another device, for example, the machining system is a laser machining device, the laser machining device is connected externally to a monitor to display the target page. The machined region is displayed by the target page. The target page may be an operation page that can only be operated, a display page that can only be displayed, or a page that can display and be operable, and the present application is not limited herein.

As can be seen from the above, the present embodiment obtains the coordinate of the at least one measurement point corresponding to the target position based on the target position on the surface of the machined material, then determines a machined region based on the coordinate of the at least one measurement point, and finally displays the determined machined region on the target page, so that a user can observe the determined machined region on the target page, and a laser machining device not equipped with a camera can also accurately determine the corresponding machined region, thereby contributing to accurately and higher efficiently machining the machined material.

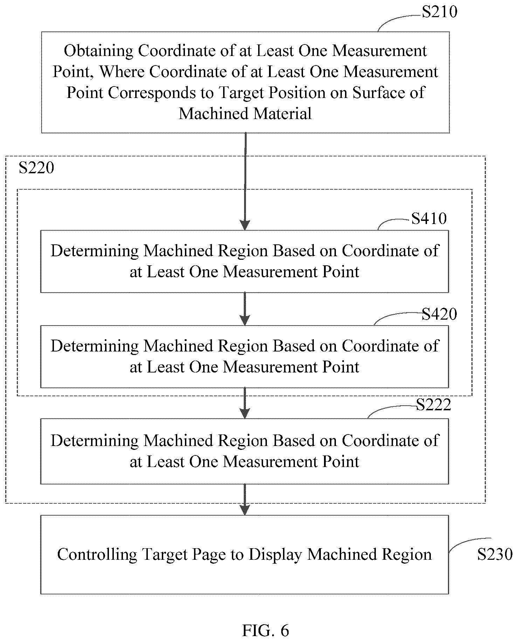

Referring to FIG. 6, FIG. 6 is a flowchart of a method of measuring the machined region according to an embodiment of the present application. The step S221 of determining at least one line segment based on coordinates of more than two measurement points includes:
Step S410, determining a first vertex and a second vertex based on the first measurement point and the second measurement point;
Step S420, connecting the first vertex and the first measurement point and the second measurement point, and connecting the second vertex and the first measurement point and the second measurement point.

These two steps are described in detail below.

In step S410, based on the first measurement point and the second measurement point, the first vertex and the second vertex are determined according to the preset determination method. Exemplarily, the preset determination method maybe determine the first vertex and the second vertex by dividing the lines connecting the first measurement point and the second measurement point into three equal parts. For example, if the first measurement point is (-3, 0) and the second measurement point is (3, 0), the first vertex is (-1, 0) and the second vertex is (1, 0), or the first vertex is (1, 0) and the second vertex is (-1, 0).

In step S420, the first vertex is connected to the first measurement point and the second measurement point, respectively, and the second vertex is connected to the first measurement point and the second measurement point, respectively.

As can be seen from the above, the present embodiment further determines the first vertex and the second vertex through the first measurement point and the second measurement point, and subsequently obtains four line segments by the connection of the four points to obtain the machined region surrounded by the four line segments, and displays the determined machined region on the target page, so that the user can observe the determined machined region in the target page.

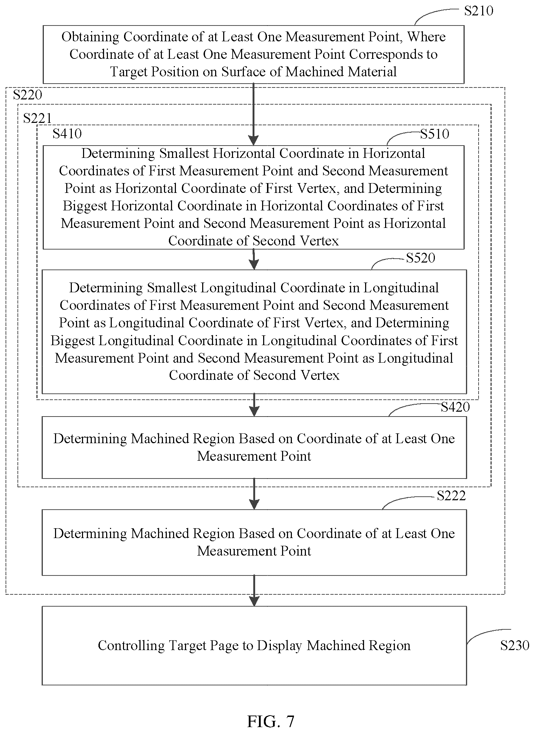

Referring to FIG. 7, FIG. 7 is a flowchart of the method of measuring the machined region according to an embodiment of the present application. A step S410 of determining the first vertex and the second vertex based on the first measurement point and the second measurement point includes:
Step S510, determining a smallest horizontal coordinate in horizontal coordinates of the first measurement point and the second measurement point as a horizontal coordinate of the first vertex, and determining a biggest horizontal coordinate in the horizontal coordinates of the first measurement point and the second measurement point as a horizontal coordinate of the second vertex; and
Step S520, determining a smallest longitudinal coordinate in longitudinal coordinates of the first measurement point and the second measurement point as a longitudinal coordinate of the first vertex, and determining a biggest longitudinal coordinate in longitudinal coordinates of the first measurement point and the second measurement point as a longitudinal coordinate of the second vertex.

These two steps are described in detail below.

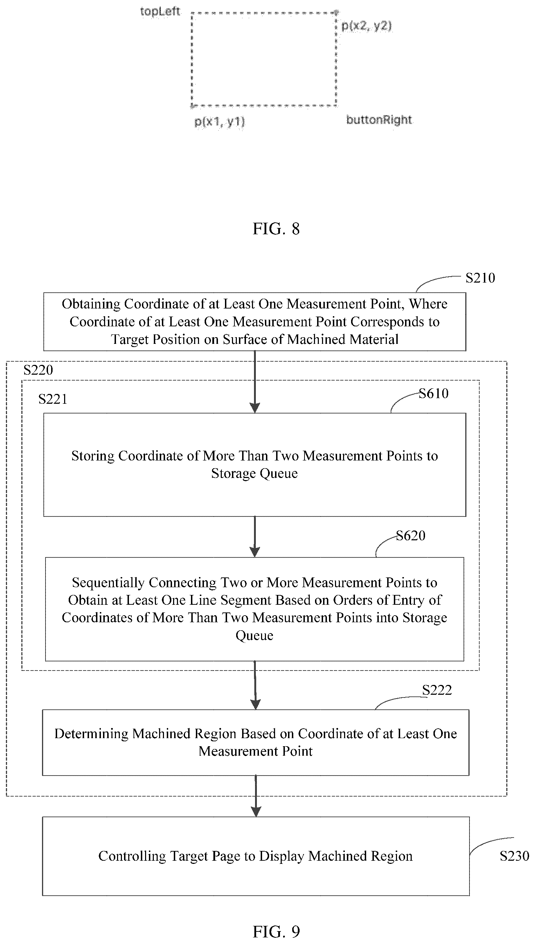

Referring to FIG. 8, FIG. 8 is a schematic diagram of determining a vertex according to an embodiment of the present application. It should be noted that the figure shows the x-axis positively oriented horizontally to the right and the y-axis positively oriented vertically downward, and the first measurement point is P (x1, y1) and the second measurement point is P (x2, y2).

Comparing the horizontal coordinates of the first measurement point and the second measurement point, the smallest horizontal coordinate is determined as the horizontal coordinate of the first vertex, and the biggest horizontal coordinate is determined as the horizontal coordinate of the second vertex. Comparing the vertical coordinates of the first measurement point and the second measurement point, the smallest vertical coordinate is determined as the vertical coordinate of the first vertex, and the biggest vertical coordinate is determined as the vertical coordinate of the second vertex.

As can be seen from the above, the present embodiment is able to quickly and accurately determine the coordinates corresponding to the first vertex and the second vertex by comparing the horizontal and vertical coordinates of the first measurement point and the second measurement point, respectively.

Referring to FIG. 9, FIG. 9 is a flowchart of the method of measuring the machined region according to an embodiment of the present application. The step S221 of determining at least one line segment based on the coordinates of more than two measurement points includes:
Step S610, storing the coordinate of more than two measurement points to a storage queue; and
Step S620, sequentially connecting two or more measurement points to obtain the at least one line segment based on orders of entry of the coordinates of more than two measurement points into the storage queue.

These two steps are described in detail below.

In step S610, a storage queue is created in advance for storing the coordinate of the measurement points.

In step S620, the coordinate of the measurement points are entered into the storage queue in a sequential order, then the orders of connecting the two or more measurement points are determined based on the sequential order, and the previous stored measurement point is connected to the later stored measurement point.

Exemplarily, the first coordinate of the measurement point entering into the storage queue is (1, 1), and the second coordinate of the measurement point entering into the storage queue is (2, 3), and the measurement point (1, 1) is connected to the measurement point (2, 3), thereby obtaining a line segment formed by two measurement points.

As can be seen from the above, the present embodiment connects the measurement points based on the orders in which the coordinate of the measurement points are entered into the storage queue, so that in a scenario in which an irregular machined region is generated based on a plurality of coordinate of the measurement points, the plurality of measurement points are connected based on the sequential order, which can help to ensure that the machined region determined finally is basically the same as the machined region that the user intends to delineate.

In an exemplary embodiment, the line segments include a straight line segment and/or a curved line segment.

To further illustrate, the line segments may be straight segments only, curved segments only, or a combination of straight and curved segments. The machined region is determined by the straight line segments and/or the curved line segments, such that the range of the machined region is more accurate and the suitable application scenarios are more abundant.

In an exemplary embodiment, the step S222 determining the machined region based on at least one line segment includes:
Step S710, obtaining an outer border of the machined region formed by the plurality of line segments based on a connection relationship of endpoints of the plurality of line segments to determine the machined region.

Further illustrated, predetermining the connection relationship of the endpoints of each line segment can effectively obtain a uniquely determined outer border of the machined region, avoiding a situation in which the line segments intersect with the line segments in the middle, which may result in generating an erroneous machined region.

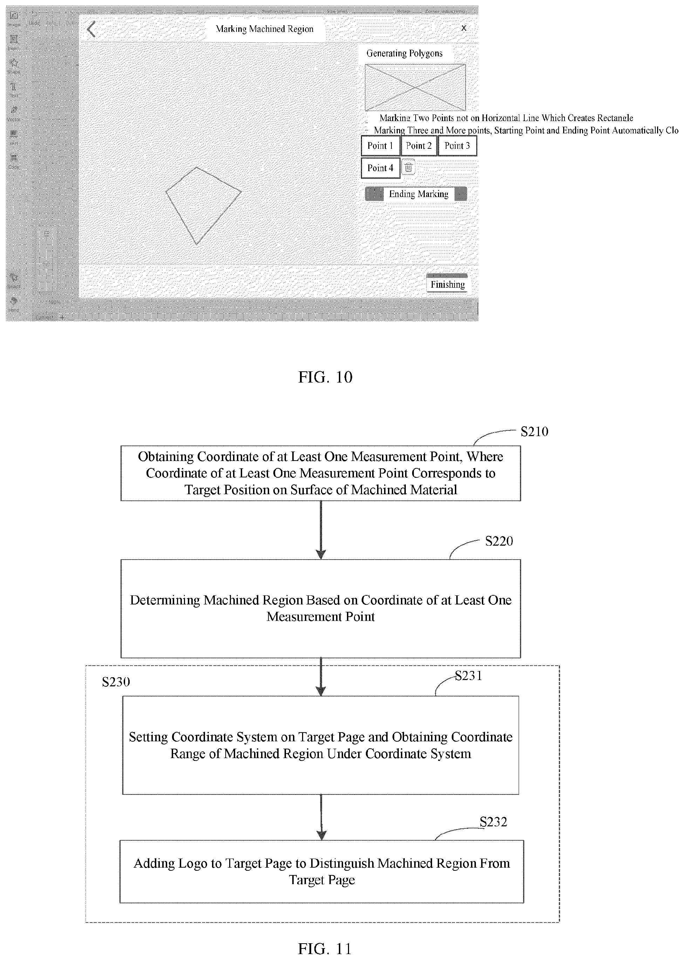

Referring to FIG. 10, it is to be understood that after the user has finished entering the coordinate of the measurement points, for a plurality of coordinate of the measurement points in the storage queue, a point corresponding to the first coordinate of the measurement point that enters into the storage queue may be connected to a point corresponding to the last coordinate of the measurement point that enters into the storage queue, so as to form a closed machined region.

Referring to FIG. 11, FIG. 11 is a flowchart of the method of measuring the machined region according to an embodiment of the present application. A step S230 of controlling a target page to display the machined region includes:
Step S231, setting a coordinate system on the target page and obtaining a coordinate range of the machined region under the coordinate system;
Step S232, adding a logo to the target page to distinguish the machined region from the target page.

These two steps are described in detail below.

In step S231, the coordinate system is preset on the target page, and the coordinate system is set in a way that the present application does not limit, which may be horizontally to the right as the positive direction of the x-axis and vertically downward as the positive direction of the y-axis; or horizontally to the right as the positive direction of the x-axis and vertically upward as the positive direction of the y-axis. By setting the coordinate system, the user can clearly see the coordinates of the outer border of its machined region, and thus know the coordinate range of the machined region.

In step S232, the marker is added to the target page, either only the marker is added inside the machined region, or only the marker is added outside the machined region, or corresponding makers are added to the inside and outside of the machined region, respectively. Exemplarily, a color marker can be added to the machined region different from that added to the outside of the machined region, such as white for the outside of the machined region and gray for the inside of the machined region. Auxiliary line markers may also be added to the border outside the machined region, such as adding a red line segment or a dotted line.

As can be seen from the above, the embodiments of the present application can help the operator intuitively distinguish the specific range and position of the machined region and the target page by setting the coordinate system on the target page and adding the marker in the target page.

In some possible embodiments, there are two or more machined regions, and determining the machined region based on the coordinate of the at least one measurement point includes:
determining a first machined region based on the coordinate of the at least one measurement point;
displaying the first machined region on a preview page;
determining a second machined region based on the coordinate of the at least one measurement point; and
displaying the second machined region on the preview page.

Specifically, the preview page may refer to the target page, or may refer to another page distinguished from the target page, which is not limited herein.

When the preview page and the target page are different pages, after displaying the first machined region on the preview page, the first machined region can be narrowed and placed at the top or bottom of the preview page to abbreviate the display of the first machined region, and subsequently, after determining the second machined region, the second machined region can be similarly abbreviated. The user can confirm on the preview page or on the computer numerical control machine that all of the machined regions have been measured and subsequently all of the machined regions on the target page are displayed.

Alternatively, it is possible to display all machined regions on the preview page, e.g. after determining the first machined region, the first machined region is retained at the original place on the page while the measurement of the second machined region is performed.

The user can measure the respective machined regions of the multiple machined materials before starting the machining, and then perform batch machining of the machined materials after completing the measurement of the multiple machined regions. For example, if the computer numerical control machine is the laser machining machine, when machining smaller machined materials such as toothpicks and cup lids, the plurality of machined materials may be placed in the machining space, and the machining may be started after completing the measurements of the machined regions of the plurality of machined materials, and in this way, in the case of needing to measure the machined regions of the plurality of machined materials, it helps to increase the convenience of machining.

In some possible embodiments, controlling the target page to display the machined region includes:
displaying a region corresponding to the first machined region and a region corresponding to the second machined region on the target page based on the relative position relationship of the first machined region and the second machined region on the preview page.

Specifically, all the machined regions can be displayed on the preview page, for example, after determining the first machined region, the first machined region is retained at the original place on the page, and the measurement of the second machined region is performed at the same time, in this way, the relative position relationship of the plurality of machined regions can be reflected in the preview page. Moreover, the relative position relationship of the plurality of machined regions remains unchanged when a region corresponding to the plurality of machined regions is displayed on the target page.

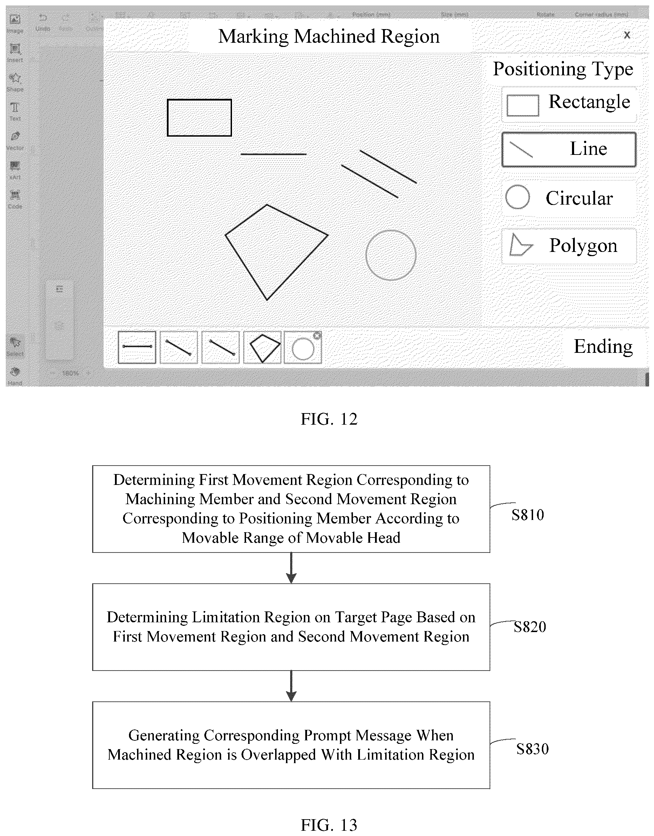

Referring to FIGS. 10 and 12, in some possible embodiments, the preview page is suspended over the target page, the brightness of the preview page is not lower than the brightness of the target page, and the preview page includes a first display region and/or a second display region. The first display region displays at least one graph (e.g., FIG. 12), the graph corresponds to the shape of the region that the user intends to machine, and the second display region displays at least one marking point (e.g., FIG. 10), the marking point is a point that the coordinate of the measurement point is mapped to the preview page based on coordinate mapping relationships.

Specifically, after the user selects the shape of the region intended to be machined in the first display region, the number of coordinates of the measurement points to be recorded can be determined based on the shape selected by the user. For example, if the shape of the user-selected region intended to be machined is a circle, two measurement points need to be input for determining the center and radius of the circle; for example, if the shape of the user-selected region intended to be machined is a rectangle, two measurement points need to be input for determining the vertices of the rectangle; for example, if the shape of the user-selected region intended to be machined is a line, two measurement points need to be input for determining the endpoints of the line; and again for example, if the shape of the user-selected region intended for machining is a polygon, two or more measurement points need to be input for determining multiple vertices of the polygon, and the polygon can be an irregular polygon.

It should be noted that the above number of measurement points is only an example, and in practice, it may also be other number of measurement points.

The second display region may display at least one marking point, and when the user markes the wrong coordinates of the measurement points, the selected marking point is deleted by clicking on the virtual button and is a marking point in the second display region, and then new coordinates of the measurement points are reobtained and the corresponding marking point is generated, and in this way, changing or deleting the measurement point wrongly marked by the user can help to further enhance the convenience of determining the machined region .

It is understood that the first display region and the second display region may be displayed on the preview page or the target page at the same time, or only the first display region or only the second display region may be displayed, or the first display region may be displayed first to determine the shape, and then the second display region is displayed to determine the marking point, which is not limited herein.

In some possible embodiments, after displaying the first machined region on the preview page, determining the machined region based on the coordinate of the at least one measurement point further includes:
deleting and scaling the selected machined region based on a third operation instruction.

The third operation instruction is triggered in the same manner as the first operation instruction and will not be repeated herein.

Referring to FIG. 13, FIG. 13 is a flowchart of the method of measuring the machined region according to an embodiment of the present application. The machining system includes a movable head, the movable head includes a machining member and a positioning member, the machining member and the positioning member are mounted at different positions of the movable head, and the method further includes:
Step S810, determining a first movement region corresponding to the machining member and a second movement region corresponding to the positioning member according to a movable range of the movable head;
Step S820, determining a limitation region on the target page based on the first movement region and the second movement region; and
Step S830, generating a corresponding prompt message when the machined region is overlapped with the limitation region.

These three steps are described in detail below.

In step S810, it is necessary to first explain that, due to the limitations of the hardware structure of the machining device, the movable heads mounted on the machining device all have their own limited maximum range of movement, only for different machining device, the maximum range of movement of the movable head may be different, and therefore, according to the hardware structure of the machining device to which the movable head belongs, it is possible to obtain the maximum range of movement of the movable head subject to the limitation. The movable range is not equivalent to the maximum range of movement, and a small range within the maximum range of movement may also be selected by the user as the movable range, which is not limited in the present application.

Exemplarily, when the user wants to machine the region in the center of the maximum range of movement, the user can select the region in the center as the movable range, and it should be noted that although a region outside the region in the center and within the maximum range of movement is objectively still reachable by the movable head, it is regarded as a limitation region due to the limitation imposed by the user. As a result, the movable range of the movable head can be further defined according to the user's machining needs, resulting in more accurate limitation and machining effects.

Based on the movable range of the movable head, it is possible to determine the first movement region corresponding to the machining member and the second movement region corresponding to the positioning member on the machining platform, and it is also possible to determine the first movement region corresponding to the machining member and the second movement region corresponding to the positioning member on the target page, which is not limited in the present application.

Further, in the case of determining the first movement region and the second movement region on the target page according to the movable range, it is possible that the first movement region and the second movement region on the machining platform are first determined according to the movable range, and then the first movement region and the second movement region on the machining platform are correspondingly mapped to the target page, or it is also possible that the region corresponding to the movable range is first determined on the target page, and then the machined region and the positioning region on the target page are determined based on the physical distance (e.g., the proportion of the physical distance to the entire movable range) between the machining member and the positioning member, which is not limited in the present application.

In step S820, the target page may be an operation page that can only be operated, a display page that can only be displayed, or a page that can display and be operable, which is not limited in the present application. The limitation region may refer to a region in which operations are limited on the machining element, the limited operations include positioning and/or machining the machining element, etc. The machining element may be an element corresponding to an operation that the user intends to perform on the to-be-machined material, such as an engraving pattern corresponding to pattern engraving, a cutting position corresponding to material cutting, a graph marking corresponding to marking, etc.. The machining element may be a regular pattern and an irregular pattern, the regular pattern such as a polygon, a circle, etc., and the irregular pattern such as an irregular figure, a scenic picture, etc. The machining elements can also be vector graphs or bitmap. The vector graphs, also known as vector graphs, is an image described by a series of geometric shapes (such as lines, curves, polygons, etc.), and can be enlarged or reduced without distortion. A bitmap, also known as a lattice diagram, is an image simulated by many pixels, each described by a color value.

The limitation regions are obtained based on the first movement region and the second movement region generated on the target page, and the limitation regions may include a limitation machined region, a limitation positioning region, and/or a limitation machining and positioning region.

If the first movement region and the second movement region are determined on the target page, the limitation region may be determined directly based on the first movement region and the second movement region on the target page. If the first movement region and the second movement region are determined on the machining platform, the limitation region on the machining platform may be determined based on the first movement region and the second movement region mapped on the target page after the first movement region and second movement region are mapped on the target page.

In step S830, the manner of prompt information includes, but is not limited to, a color prompt, a text prompt, a sound prompt, etc. Exemplarily, a pop-up window may be used to indicate in text that "the machined region overlaps with the limitation region" , or a voice may be used to indicate that "the machined region overlaps with the limitation region" , or an alarm may be used to indicate that the machined region overlaps with the limitation region.

As can be seen from the above, the present embodiment can effectively assist the user in determining whether machining can be performed in the machined region by providing corresponding prompts when the machined region overlaps with the limitation region.

The following is an example of the measurement process of the machined region.

The user clicks a corresponding function button on the host computer to measure the machined region on the machined material. In response to the user's click, the host computer generates corresponding operation instructions and sends them to the laser machining device, which marks the coordinate of the measurement point 1 in response to the operation instructions, and a buzzer responds after the coordinate of the measurement point 1 is conformed. Similarly, the coordinate of the measurement point 2 can be obtained.

A positioning auxiliary line or auxiliary box is generated on the target page based on the measurement point 1 and the measurement point 2 marked by the position coordinates, to obtain the machined region corresponding to the movable head on the target page. Subsequently, after the user moves the machining element in the host computer to the machined region, the host computer sends a machining request to the movable head, and the movable head performs a machining operation in response to the machining request. It should be noted that the movable head is in a positioning state during moving to the measurement point for marking, is in a machining state when performing the machining operation in response to the machining request, and is in a standby state for the rest of the time.

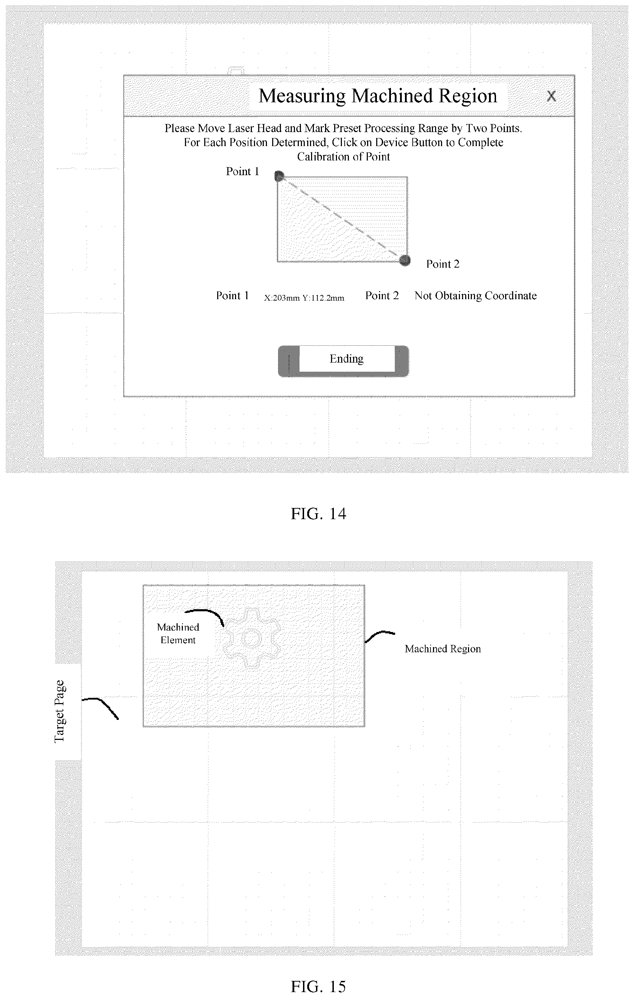

Referring to FIG. 14, FIG. 14 is a schematic diagram of an interface for determining the machined region on the target page according to an embodiment of the present application. The target page of FIG. 14 obtains the position coordinates of the movable head at this moment, as shown in the figure, the position coordinates of the movable head at this moment are X=203mm for the horizontal coordinate, Y=112.2mm for the vertical coordinate, and the marking has been completed for the point 1, and the position coordinates of the point 2 can then be marked to generate the rectangle region shown in the figure through the two points, and the rectangle region is the machined region corresponding to the movable head generated on the target page. The rectangular region is the machined region corresponding to the movable head generated on the target page.

Referring to FIG. 15, FIG. 15 is a schematic diagram of an interface where a machining element on a target page is in the machined region according to an embodiment of the present application. The user moves the machining element to the machined region in the host computer, and after confirming that the machining element is in the machined region, the user can control the movable head to perform the machining operation.

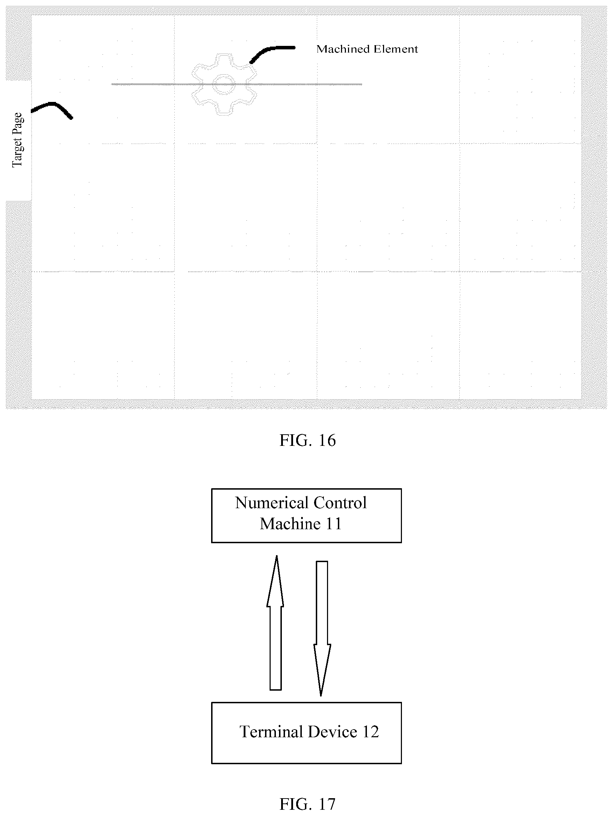

Referring to FIG. 16, FIG. 16 is a schematic diagram of an interface where a machined region cannot be determined on the target page according to an embodiment of the present application. If the measurement point set on the surface of the machined material have the same X-axis coordinates or Y-axis coordinates, the corresponding machined region cannot be generated on the target page, and an erroneous machined region (i.e., a straight line) can be generated as shown in the figure, or a limitation can be prompted when the user sets the measurement points, such as "the two selected points have the same X-axis coordinates or Y-axis coordinates, and the machined region cannot be generated, please adjust in time" .

The above content is mainly used in machining the machined object, to solve the problem of not enough accurately determining the machined region, and after determining the machined region, in order to ensure the machining effect, it usually also needs to carry out the machining alignment. The related technology usually uses the camera to take photos on the machined object, in order to determine the relative position relationship of the machined object and the numerical control machine loading platform, and then to determine a region on the target page corresponding to a region where the machined object is currently located in, to place the machined pattern, thereby completing the machining alignment of the machined pattern. The user can only make a rough judgment of the machined region based on operating experience, it is difficult for the numerical control machine not equipped with a camera to complete the accurate alignment of the machined pattern, which leads to poor machining results of the machined object. Since it needs to further solve the problem of the accuracy of the machining alignment of the machined object, the present application may also include determining a position of the starting auxiliary point of the machined pattern in the machined region, then drawing mapping points on the target page according to the position of the starting auxiliary point, to obtain a distribution of the mapping points on the target page. The mapping point is used for placing the machined pattern, and finally indicating a specific display position of the machined pattern based on the relative position relationship of the mapping point and the machined pattern.

The drawing of the mapping points enables the user to know the to-be-machined region of the machined object on the target page, and the user can adjust the machined pattern when placing the machined pattern, so that the machined pattern is adapted to a region on the target region corresponding to the to-be-machined region of the machined object, which helps to realize the accurate alignment of the machined pattern and improve the machining effect before the machined object is machined by the numerical control machine. The laser numerical control machine not equipped with a camera can also realize convenient and accurate machining alignment of the machined pattern by the method proposed in the present application.

Referring to FIG. 17, FIG. 17 is another system architecture applied by embodiments of the present application. The architecture may include: at least one numerical control machine 11 for machining the machined object, and a terminal device 12 for providing visualization operation and a target page for the numerical control machine 11 for implementing the machining alignment method of the present application. The numerical control machine 11 positions an auxiliary point by the light spot emitted by itself and obtains a position of the starting auxiliary point.

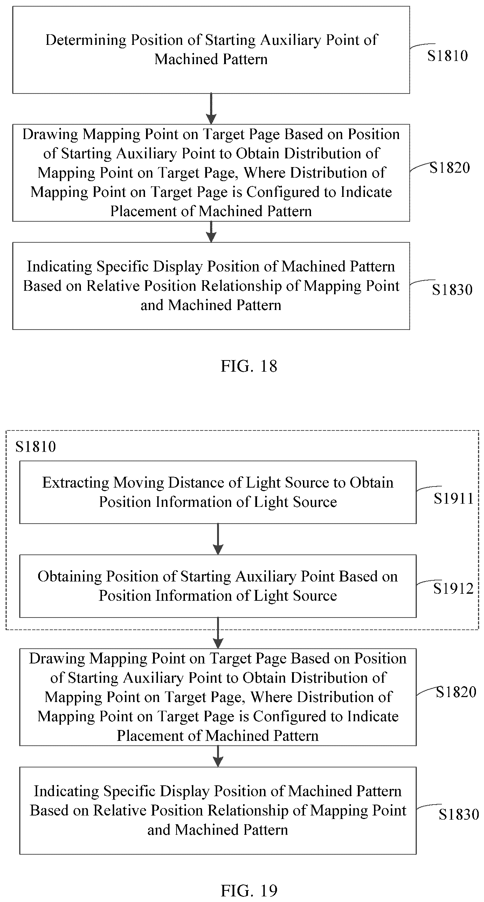

Referring to FIG. 18, after controlling the target page to display the machined region, the method further includes performing machining alignment in the machined region on the target page, and on the basis of FIG. 2, FIG. 18 is a flowchart of the method for achieving a machining alignment according to an embodiment of the present application after controlling the target page to display the machined region.
Step S1810, determining a position of the starting auxiliary point of a machined pattern;
Step S1820, drawing a mapping point on the target page based on the position of the starting auxiliary point to obtain a distribution of the mapping point on the target page, where the distribution of the mapping point on the target page is configured to indicate a placement of the machined pattern; and
Step S1830, indicating a specific display position of the machined pattern based on a relative position relationship of the mapping point and the machined pattern.

The above three steps are described in detail below.

In the embodiments of the present application, it enables the user to know the region on the target page corresponding to the to-be-machined region of the machined object, and the user can adjust the machined pattern when placing the machined pattern, so that the machined pattern is adapted to the region on the target region corresponding to the to-be-machined region of the machined object, which helps to realize the accurate alignment of the machined pattern and improve the machining effect before the machined object is machined by the numerical control machine. The laser numerical control machine not equipped with the camera can also realize convenient and accurate machining alignment of the machined pattern by the method proposed in the present application.

In step S1810, the numerical control machine determines the position of the starting auxiliary point of the machined pattern according to its own configured hardware device, such as determining the position of the starting auxiliary point of the machined pattern by the light spot emitted from the light source.

Specifically, it should first be noted that the acquisition of the position of the starting auxiliary point can be realized in the present application by continuously obtaining the position of the light spot, and therefore the numerical control machine for performing the machining alignment is provided with at least one light source, and the light spot formed by the light beam emitted from the light source can be used for the machining alignment realized in the present application, and in addition to that, the light source can be used for performing the machining as well. Based on this, the light source used to emit the light spot in the present application includes a laser emitting light source (machining light source) and/or a visible light emitting light source (alignment light source).

The light spot may include a machining light spot formed by the light beam emitted from the machining light source and/or the alignment light spot emitted from an alignment light source, etc., which is not limited herein. It is to be clarified that the machining light source emits a weak light to thus form a light spot when it performs the machining alignment by the machining light spot. The weak light refers to a light beam emitted from the machining light source within a set power range. Because preforming the machining alignment on the machining image is for the light source using the machining light spot to machine the machined object, to facilitate the machining of the numerical control machine. The positions of the machining light spot or the alignment light spot are formed based on the coordinate where the machining light source is located, and the coordinate system where the machining light source is located is also the light source coordinate system.

The color of the light spot is not limited here, but may be any color, such as white, yellow, green, red, etc.

To further illustrate, in the numerical control machine, the light source is provided on the laser head. The laser head of the numerical control machine, i.e. the movable head can be used for machining alignment, and laser machining on basis of the machining alignment. A laser emitting light source, or a combination of a laser emitting light source and an infrared emitting light source, is distributed above the laser head.

It should be understood that in an embodiment of the present application, the light source may be a laser emitting light source used to perform laser machining, which emits a light beam to form a spot, which in turn is used to mark the position of the light beam. The light source may also be another light source additionally configured to be used exclusively for emitting the light beam in the machining alignment to form the light spot.

When the laser head is provided with only the laser emitting light source, the laser emitting light source is used to perform the machining alignment and the laser machining, and when the laser head is provided with the laser emitting light source and an infrared emitting light source, the machining alignment can be performed by the laser emitting light source or the infrared emitting light source, and the laser machining can be performed by the laser emitting light source.

During performing machining alignment of the numerical control machine, the light source is first driven to emit the light beam, so that the light beam forms a light spot on the machined object or a plane used by the numerical control machine to carry the machined object. The light spot is used to indicate the current position irradiated by the light beam emitted from the light source. The light source and the light spot have a known relative position relationship. In other words, the position of the light spot in the light source coordinate system can be obtained based on the position information of the light source and the relative position relationship of the light source and the light spot.

It should be clarified that for the positioning of an auxiliary point used for machining alignment, the light source can be driven to emit the light beam to irradiate the starting auxiliary point, to form the light spot at the starting auxiliary point, and the position of the starting auxiliary point can be obtained based on the position of the light spot. The auxiliary point is a point selected on the machined object or on the plane where the machined object is located. The auxiliary point can be the starting point for machining the object, or any other point. The auxiliary point provides a reference for the placement of the machined pattern on the machined object before the machining is performed. The auxiliary points include a starting auxiliary point, thus the starting auxiliary point is also only a reference point for placing the machining image to indicate where the machined pattern is to be placed. It is to be clarified that the auxiliary point may refer to a point on the machined object, or any point selected on the plane where the machined object is located, and is not limited to the region where the machined pattern is placed.

It is further clarified that, as used herein, the term "laser emitting light source" includes any source of electromagnetic radiation or focused or coherent energy that uses photons to modify a substrate or to cause some alteration or change in the material on which the photons are impinged. A laser emitting light source (whether a cutting tool or a diagnostic tool) can emit any desired wavelength, and laser emission includes, for example, microwaves, lasers, infrared lasers, visible lasers, UV lasers, X-ray lasers, radiation lasers, etc.

In another embodiment of the present application, for the movement of the light source, the light source may be controlled to move to a specified position in accordance with a target instruction for the light spot to be located at the starting auxiliary point, or it may be moved under the drag of the user, which is not limited herein. The target instruction is generated by an operation action initiated by the user at an host computer constituted by a control panel or a terminal device of the numerical control machine.

In another embodiment of the present application, with the driving of the light source by the numerical control machine, the light spot moves synchronously and stops moving until moving to the starting auxiliary point, at which time the position of the light spot is the position of the starting auxiliary point, i.e., the position of the starting auxiliary point is obtained based on the position of the light spot.

Referring to FIG. 19, FIG. 19 is a flowchart of determining a position of the starting auxiliary point of the machined pattern according to an embodiment of the present application. An embodiment of the present application provides a step S1810 of determining the position of the starting auxiliary point of the machined pattern, including:
Step S1911, extracting a moving distance of the light source to obtain position information of the light source; and
Step S1912, obtaining the position of the starting auxiliary point based on the position information of the light source.

The above two steps are described in detail below.

In step S1911, the light source is driven to position the starting auxiliary point, so that the light spot moves to the starting auxiliary point, and while the light source is driven to move, the moving distances of the light source on the various axes of the light source coordinate system are calculated based on the moving distances of the light source, and the position information of the light source is then obtained. The origin of the light source coordinate system can be set by the user, or can be the default origin, which is not limited herein. In this way, it helps to ensure the accuracy of the position of the starting auxiliary point.

It is to be clarified that when the light source moves at different speeds, the moving distance of the light source is extracted at different frequencies. Exemplarily, when the speed of the light source is 0.01 m/s, the moving distance of the light source is extracted at intervals of 2s, and when the speed of the light source is 1m/s, the moving distance of the light source is extracted at intervals of 0.5s.

It is also to be clarified that the frequency for extracting the moving distance of the light source may also be set to a generalized extraction frequency. Exemplarily, the moving distance of the light source is extracted at intervals of 1s regardless of the moving speed of the light source and whether it is moving.

In other words, the moving distance of the light source is extracted not only when the light source is moving, but also when the light source stops moving, i.e., in the execution of step S1911, the extraction of the moving distance of the light source at fixed intervals and the acquisition of the current position information of the light source are to prevent the light source from movement which is caused by an external factor, but the moving distance of the light source is not recorded, resulting in occurrence of that the actual moving distance of the light source is not inconsistent with the moving distance of the light source which corresponds to the position information of the light source.

Exemplarily, when the moving speed of the light source is 0m/s, the moving distance of the light source is still obtained at intervals of 1s, and the current position information of the light source is calculated.

In another embodiment of the present application, in order to optimize the situation in which accurate position information of the light source cannot be obtained based on the moving distance of the light source because the current position information of the light source is unclear or not accurate enough, it is necessary to first resume the light source' s seat, so as to make the position information of the light source accurate again, and thus ensure the accuracy of the subsequently obtained position information of the light source.

To resume the light source' s seat means to move the light source to its origin. Specifically, the light source can be moved to the origin of the light source coordinate system by moving the light source to the origin according to the target instruction. In addition, the light source can be manually manipulated by the user directly to drag the light source, so as to make the light source move to the origin of the light source coordinate system.

It is further clarified that in another embodiment of the present application, when the current position information of the light source is determined to be accurate and error-free position information, it may not be necessary to resume the light source' seat. The position information of the light source is calculated based on the moving distance of the light source relative to the light source coordinate system, and as long as there are no external influencing factors that make the movement of the light source not recorded, there is no need to resume the light source' seat. Thus, it needn' t to resume the light source' seat before every movement.

In this embodiment, the following device can be used to finish resuming the light source' seat.

The numerical control machine includes a track device, a frame slidably mounted to the track device, and the light source slidably mounted on the track device.

Both the frame and the track device are adapted to assemble a homing sensor at the origin of the light source coordinate system, the homing sensor adapted to the frame assembly of the track device is provided with a sensing member, and the homing sensor at the bottom of the light source and adapted to the assembly of the track device is provided with a sensing member.

The movement mechanism of the light source moves along the track device until the homing sensor assembled at end of the track device close to the origin senses the sensing member adapted to the bottom of the light source, so that the homing sensor senses the moving homing of the light source, to finish the moving homing of the light source on the track device.

The track device is driven to initiate the head of the light source and the track device on the frame to start moving until the homing sensor assembled at the origin position of the frame senses the sensing member adapted to the track device, so that the homing sensor senses that the track device carrying with the light source moves to resume its' seat, i.e., the light source moves to resume its' seat.

It should be understood that when the sensing member senses with the homing sensor, a change in the internal signal of the homing sensor occurs, and therefore, herein, by monitoring the change in the internal signal of the homing sensor, it is possible to determine whether the sensing member senses with the homing sensor.

It should be noted that the above homing sensor may be a photoelectric sensor, a contact sensor, and other sensors that can achieve the above purpose.

In step S1912, when the light spot is overlapped with the starting auxiliary point with the movement of the light source, the position of the light spot is obtained based on the position information of the light source, and because the light spot is overlapped with the starting auxiliary point, the position of the light spot is also overlapped with the position of the starting auxiliary point.

In this embodiment, the present application positions the light source by obtaining the moving distance of the light source, to obtain the position information of the light source, and then obtains the position of the starting auxiliary point based on the position information of the light source, instead of relying on expensive positioning hardware and cameras, thereby saving the material cost of the numerical control machine, and the method provided in this embodiment is simple to compute, and the position information of the light source can be obtained by only obtaining the moving distance of the light source, which saves computational resources in the numerical control machine.

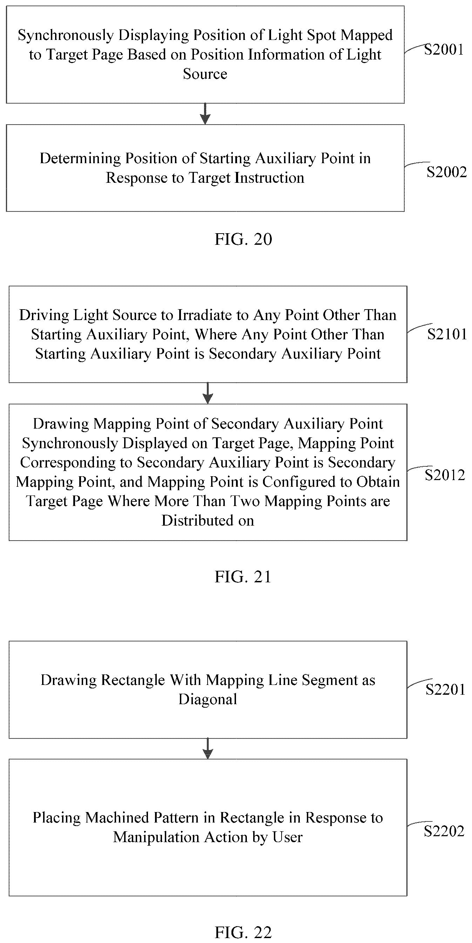

Referring to FIG. 20, FIG. 20 is a flowchart of obtaining a position of the starting auxiliary point based on the position information of the light source according to an embodiment of the present application. An embodiment of the present application provides a step of obtaining a position of the starting auxiliary point based on the position information of the light source, including:
Step S2001, synchronously displaying a position of a light spot mapped to the target page based on the position information of the light source; and
Step S2002, determining the position of the starting auxiliary point in response to a target instruction.

The above two steps are described in detail below.

In step S2001, the light spot is synchronously displayed on the target page in order to make user' s operation more convenient and intuitive. Specifically, the position of the light spot is obtained based on the position information of the light source obtained each time, and then the points mapped by the light spot on the target page are synchronously displayed on the target page based on the mapping relationship of the light source coordinate system and the target page coordinate system, and the coordinate system where the target page is located is referred to as the target page coordinate system.

As the light source moves, the position information of the light source is obtained at a high frequency, and then the position of the light spot is obtained at a high frequency and displayed synchronously on the target page, so that the dynamic movement of the light spot can be seen on the target page. In this way, the user can see the real-time change of the position of the mapping point on the target page.

It should be clear that the target page is a visualization interface on or connected to the numerical control machine for mapping and displaying the machining width of the numerical control machine, a placement of machined patterns on the numerical control machine, and assisting the numerical control machine in machining. In order that the operation actions performed on the target page can be accomplished by the numerical control machine in the real world, the size of the target page is not larger than the movable region of the laser head and/or other light source. In other words, as long as the operation actions performed in the target page, such as machining alignment and placing the machined pattern for engraving, can all be accomplished by the numerical control machine without exceeding the movable region of the laser head and/or other light sources to the extent that they cannot be machined.

In step S2002, the numerical control machine generates a target instruction in response to the user's operation, and based on the target instruction, obtains position information of the light source at a certain point in time or when it moves to a certain position as the position of the starting auxiliary point. The target instruction may be an instruction triggered in response to the user's operation, or may be an instruction triggered according to a condition set in the computer numerical control machine or the host computer, without limitation herein.

In another embodiment of the present application, in order to enable the user to have different aspects of the operation experience, when the light source stops moving, the acquisition of the position information of the current light spot is determined based on the target instruction. If there exists a target instruction for obtaining the current position of the light spot, the acquisition of the position information of the light spot is carried out, and if there is no such instruction, it is not carried out. The target instruction is generated by an operation action initiated by the user at a host computer constituted by a control panel or a terminal device of the numerical control machine.

In another embodiment of the present application, the present application may also trigger the instruction to obtain the position information of the light source by the light source stopping, and thus obtain the position information of the light source. When the light source stops moving, the positioning of the starting auxiliary point is also completed, and the position information of the light source when the light source stops moving is obtained according to the corresponding moving distance when the light source stops moving, the position information of the light source is the position of the light spot when it reaches the starting auxiliary point; and then the position of the light spot is obtained according to the relative position relationship of the light source and the light spot, the position of the light spot is the position of the starting auxiliary point.

In another embodiment of the present application, the user initiates an instruction through the host computer software or directly manipulates the numerical control machine to obtain the position information of the light source, and exemplarily, the user controls the state of a button of the numerical control machine (e.g., pressed or released) to trigger the instruction to obtain the position information of the light source.

In the embodiment of the present application, by obtaining the position information of the light spot in real time and displaying it synchronously on the target page, the user operation is made more convenient and intuitive.

In step S1820, based on the obtained position of the starting auxiliary point, the position of the starting auxiliary point is transformed between coordinate systems to obtain the point in the target page coordinate system corresponding to the starting auxiliary point, and is displayed on the target page to obtain the mapping point of the starting auxiliary point.

Mapping points are used to provide a reference for the placement of the machined pattern on the target page. The placed machined pattern is the pattern that the user wants to machine on the machined object. When there is a plurality of mapping points, and also both the distribution of the mapping points on the target page, more reference can be provided for the placement of the machined pattern on the target page through the relative position relationship of the mapping points and the machined pattern.

According to the mapping relationship of the light source coordinate system and the target page coordinate system, the relative position relationship of the machined pattern and the mapping points in the target page coordinate system is synchronized to the light source coordinate system. That is, in the real world, the relative position relationship of the pattern being machined on the machined object and the auxiliary point is the same as the relative position relationship of the machined pattern and the mapping point.

It should be clear that the "placement" mentioned above includes but not only changing the position of the machined pattern, rotating, flipping, zooming, adjusting the ratio of edges and other flat pattern editing operations on the machined pattern.

Drawing the point displayed on the target page, that is, marking the point on the target page, so that the point is displayed on the target page, that is, the movement or existence of the light spot will not affect the display of the mapping point on the target page, and finally the distribution of the mapping point on the target page is obtained.

In short, on the target page, the mapping points are drawn according to the starting auxiliary point, and as the light spot continues to move, and as the position of the light spot continues to be obtained, the mapping points corresponding to the secondary auxiliary points or even the mapping graphs continue to be drawn on the target page on a basis of the mapping points corresponding to the starting auxiliary point, so as to obtain at least one mapping point. The mapping graphs is composed of lines between the mapping points, and is generated to better describe the position relationship of the mapping points and to provide a more intuitive reference for placing the machined pattern.

It is to be clarified that before carrying out the present step, a mapping relationship of the light source coordinate system and the target page coordinate system is established, so that a position (coordinate) corresponding to the point in one coordinate system can be obtained based on the mapping relationship of the two coordinate systems and the position (coordinate) of any point in the other coordinate system. Exemplarily, the coordinates of a point in the target page coordinate system can be obtained based on the position of the point in the light source coordinate system. The coordinate system where the target page is located is the target page coordinate system.

Referring to FIG. 21, FIG. 21 is a flowchart of drawing the mapping point on the target page based on the position of the starting auxiliary point and drawing the secondary auxiliary point after obtaining a distribution of the mapping point on the target page according to an embodiment of the present application. Embodiments of the present application provide the step of drawing the mapping point on the target page based on the position of the starting auxiliary point and drawing the secondary auxiliary point after obtaining the distribution of the mapping point on the target page, including:
Step S2101, driving the light source to irradiate to any point other than a starting auxiliary point, where the any point other than the starting auxiliary point is a secondary auxiliary point; and
Step S2102, drawing a mapping point of the secondary auxiliary pointsynchronously displayed on the target page, the mapping point corresponding to the secondary auxiliary point is the secondary mapping point, and the mapping point is configured to obtain the target page where more than two mapping points are distributed on.

The above two steps are described in detail below.

When the user believes that the machining alignment can be finished directly based on the starting mapping points, the user may choose to take the starting mapping points as a reference for placing the machined pattern, and thus the machining alignment is finished.

For example, when placing a circular pattern with a diameter of 2cm, it is sufficient to select a point on the machined object as the center of the pattern to be machined and set this point as the starting auxiliary point. In this way, machining alignment of the machined pattern with a diameter of 2cm is completed by placing the machined pattern on the target page with the first mapping point as the center of the circle.

It should be made clear that although only the starting mapping point is drawn on the target page to provide a reference for the machining alignment, the light spot can be moved to the position of the next auxiliary point, and the markings displayed by the light spot on the target page at this time can provide a further reference for the placement of the machined pattern, without drawing further mapping points.

Of course, in addition, in order to more accurately complete the machining alignment, the user may also choose to move the light spot to the position of the secondary auxiliary point sequentially after drawing the starting mapping point, and then based on the synchronized display of the light spot on the target page, the secondary mapping points mapped by the secondary auxiliary point on the target page are drawn sequentially. The secondary mapping points are used sequentially as a reference for machining alignment. Auxiliary points include the starting auxiliary point and the secondary auxiliary point, and any auxiliary point other than the starting auxiliary point is the secondary auxiliary point. The mapping points distributed on the target page include the mapping point corresponding to the starting auxiliary point and the secondary mapping point corresponding to the secondary auxiliary point.

In step S2101, the light source is driven to move, so that the light spot moves synchronously with the light source until the light spot moves to the next auxiliary point. The position information of the light source is obtained at this time, and then the position of the light spot is obtained based on the relative position relationship of the light source and the light spot, which is also the position of the auxiliary point.

In step S2102, when the light spot is moved to the position of the secondary auxiliary point in step S2101, the light spot is displayed synchronously on the target page, the secondary auxiliary point is displayed synchronously on the target page, and this point is drawn to get the secondary mapping point mapped by the secondary auxiliary point on the target page.

It should be made clear that steps S2101 and S2102 can be repeated several times to draw multiple secondary mapping points, depending on the needs of the machining alignment.

In an embodiment of the present application, the forward machining alignment of the numerical control machine is more accurate by drawing multiple mapping points to provide more reference to the placement of the machined pattern on the target page.

In an embodiment of the present application, a mapping line segment is drawn from the starting mapping point as a start point and any secondary mapping point as the end point. The mapping line segment is displayed on the target page, and the mapping line segment can be extended to form various graphs according to the machining needs, so as to provide users with reference when placing the machined pattern. For example, a rectangle can be generated with a mapping line segment as a side of the rectangle, providing a reference for the placement of the machined pattern. It can also use the mapping line segment as a side of the triangle, pentagon, and user-defined graphs, or as a diagonal, center line, symmetry axis to derive a variety of graphs for placing machined patterns to provide reference.

In the embodiment of the present application, mapping line segments are drawn on the basis of mapping points to provide reference for placing machined patterns, which enriches the way of providing reference for placing machined patterns and enables users to have more choices.

For illustrative purposes, please refer to FIG. 22, which shows a flowchart of placing the machined pattern after mapping line segments are drawn in the direction of starting from the starting mapping point to any secondary mapping point in an embodiment of the present application. The embodiment of the present application provides the steps of placing the machined pattern after drawing the mapping line segment in the direction of starting from the starting mapping point to any secondary mapping point, including:
Step S2201, drawing a rectangle with the mapping line segment as a diagonal; and
Step S2202, placing the machined pattern in the rectangle in response to a manipulation action by a user.

The above two steps are described in detail below.

Step S2201, a rectangle is generated on the target page with the mapping line segment as the diagonal, the rectangle indicates the region where the machined pattern is placed on the target page.

In step S2202, the numerical control machine places the machined pattern in a rectangle in a response to the user's control action. In order to meet the machining needs, the machined pattern can be translated, rotated, mirrored, clipping and other modifications.

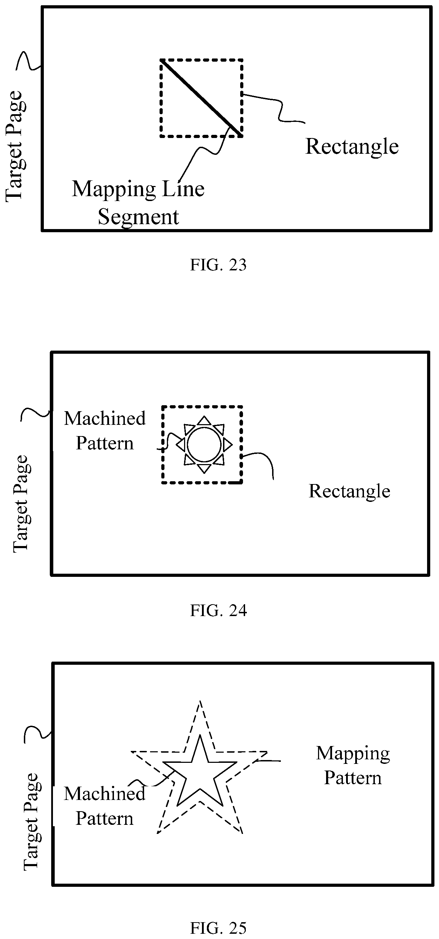

Refer to FIGS. 23 and 24, FIG. 23 shows a schematic diagram of drawing a rectangle based on mapping line segments according to an embodiment of the present application. As shown in the figure, the rectangle is drawn by taking mapping line segments as a diagonal to provide reference for placing machined patterns. FIG. 24 is a schematic diagram of placing the machined pattern in the rectangle according to an embodiment of the present application. The machined pattern is placed in the formed rectangle as shown.

In the embodiments of the present application, rectangles are drawn based on mapping line segments as a reference for placing machined patterns. On the one hand, rectangles are drawn in a diagonal way, which is relatively simple and easy to understand, such that the users can easily use and have a better sense of experience. On the other hand, drawing rectangles by mapping line segments can frame the region where the machined pattern can be placed, which can provide a more specific reference for the placement of the machined pattern.

In another embodiment of the present application, according to the needs of machining, two or more mapping points can also be directly connected, the mapping line segment connecting the mapping points is used as a part of the graph to form a mapping graph to provide reference for the placement of the machined pattern.

It should be made clear that the mapping graph can be a closed graph connected by mapping points, or it can be an open graph such as a polyline segment connected by more than two mapping points, and can be adapted to various shapes of machined patterns. In an embodiment of the present application, a mapping line segment connecting two mapping points may also be used as a mapping graph to provide a reference for placing the machined pattern.

In addition, it should be noted that after the connection of mapping points on the target page, there is no limit to the number of obtained mapping graphs, which can be one or any other number. It should be further clarified that it is not necessary to connect all mapping points on the target page, that is, there can be both mapping graphs and unconnected mapping points on the target page.

In another embodiment of the present application, mapping graphs may also be obtained without the connection of mapping points. For example, the numerical control machine draws a mapping graph according to the target instruction with a mapping point as the starting point, so that the target page records the moving track of the light spot and the moving track of the light spot is drawn on the target page until the light spot stops moving, that is, the moving track of the light spot displayed on the target page forms a mapping graph. The target instruction is generated by the operation action initiated by the user in the host computer composed of the control panel or terminal device of the numerical control machine.

In addition, it is necessary to supplement that the mapping graph can also be drawn in the following way. For example, the numerical control machine enters into a state of automatically drawing mapping graphs when it begins to draw mapping graphs based on the target instruction. For the subsequent mapping points drawn, which are connected automatically by lines until it exits the state of automatically drawing mapping graphs, or the number of connections of mapping points is limited, so that the numerical control machine automatically exits the state of automatically drawing mapping graphs. If the number of connections of mapping points is set to 2, the next three mapping points are connected by lines in order to obtain a mapping graph. After these, mapping points drawn are no longer automatically connected by lines. Unless the numerical control machine enters into the state of automatically drawing mapping graphs again.

Please refer to FIG. 25, which shows a schematic diagram of drawing a mapping graph according to an embodiment of the present application. As shown in FIG. 25, the mapping line segment connecting the mapping points is used as a part of the graph to form the mapping graph, and the machined pattern is placed by taking the mapping graph as a reference.

In the embodiment of the present application, mapping graphs are drawn through the above embodiments to facilitate users to customize the shape of mapping graphs, which can be adapted to machined patterns of different shapes, and no longer need to be adjusted by hand and eye, the efficiency and effect of machining alignment of numerical control machines are improved.

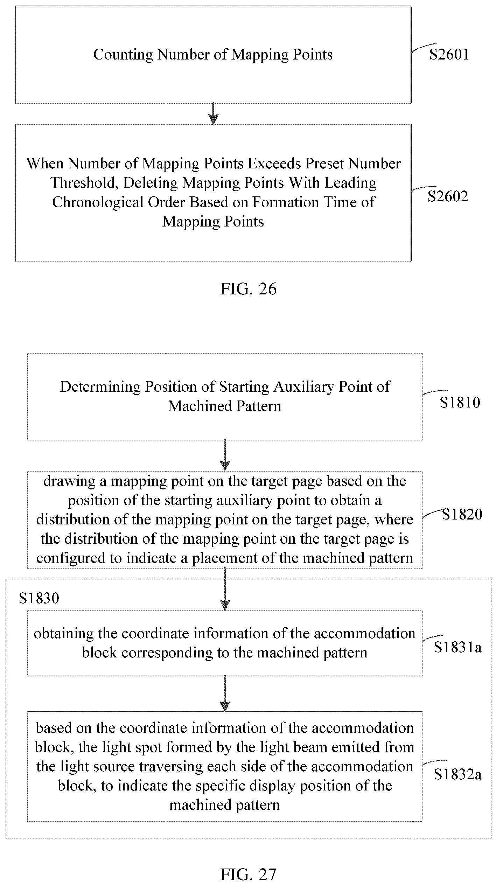

Please refer to FIG. 26, which shows a flowchart of cleaning mapping points after mapping points are drawn on the target page based on the starting auxiliary point position and the distribution of the mapping points on the target page is obtained according to an embodiment of the present application. The embodiment of the present application provides steps of cleaning mapping points after mapping points are drawn on the target page based on the starting auxiliary point position and the distribution of the mapping points on the target page is obtained, including:
Step S2601: counting the number of mapping points; and
Step S2602, when the number of the mapping points exceeds a preset number threshold, deleting mapping points with a leading chronological order based on formation time of the mapping points.

The above two steps are described in detail below.

To prevent users from performing operations due to excessive mapping points and mapping graphs, the mapping points and/or mapping graphs need to be deleted.

In step S2601, the number of mapping points is counted. The mapping points here include independent mapping points not connected by lines and mapping points connected by lines. Lines include straight lines and curves, which can be lines with any characteristics, such as wavy lines and broken lines, which are not defined here.

In an embodiment of the present application, it is also possible to count the merging of mapping points not connected by lines and mapping graphs, and count them separately. When mapping points and mapping graphs are drawn, the numerical control machine records the drawing time and number of the mapping points not connected by lines and the mapping graphs. The mapping points connected by lines are marked as non-mapping points, and the non-mapping points connected by lines are counted as a whole.

In step S2602, if the number of mapping points exceeds the preset threshold, the earliest mapping points are deleted until the number of mapping points is less than or equal to the number threshold.

In an embodiment of the present application, a preset number threshold is set for mapping graphs. If the number of mapping graphs exceeds the number threshold, the mapping graphs established previously are deleted according to the establishment time of the mapping graphs until the number of mapping graphs does not exceed the number threshold. Understandably, the preset number threshold can be set according to the size of the machined surface, the number of machined patterns, the material of the machined object, the user setting and other factors, which is not limited herein. For example, in the case of large machined surface, the preset number threshold is larger. When the number of machined patterns is large, the preset number threshold is large. When the material of the machined object is harder, the preset number threshold is larger, etc. The preset number threshold can be 3, 6, 10, 15, 18, 21, etc., which is not limited herein.

In another embodiment of the present application, a total number of mapping points not connected by lines and mapping graphs is preset. If the number of mapping points and mapping graphs exceeds the number threshold, the earliest established mapping graphs or mapping points will be deleted until the total number of mapping points and mapping graphs does not exceed the number threshold.

In addition, depending on the user's choice, the mapping points and/or mapping graphs on the target page are selected for deletion by the numerical control machine.

It should be made clear that in another embodiment of the present application, the deletion of mapping points and mapping graphs is not premised on steps S1810, S1820, and S1830, and the mapping points and mapping graphs displayed on the target page can be drawn in any other way. The number of mapping points and mapping graphs is counted based on the records of mapping points and mapping graphs drawn on the target page, and then the mapping points and mapping graphs are automatically or manually deleted based on the number limitation of mapping points and mapping graphs.

In the embodiment of the present application, by deleting mapping points and mapping graphs, a better experience is brought to the user, and the storage space of the numerical control machine is released, thereby preventing users from performing operations due to excessive mapping points and mapping graphs.

In step S1830, in order to enable the user to intuitively observe which region of the machined object will the machined pattern be machined to, the host computer indicates the specific display position of the machined pattern by controlling the hardware device configured by the numerical control machine itself, and the specific display position of the machined pattern is used to indicate the position of the machined pattern on the machined object.

Specifically, according to the relative position relationship of the mapping point and the machined pattern in the target page coordinate system, and the mapping relationship of the target page coordinate system and the light source coordinate system, the position information of the machined pattern in the light source coordinate system is obtained, that is, if the machined pattern is machined on the machined object, its position is also called the specific display position of the machined pattern. Finally, the region is indicated by the numerical control machine.

It needs to be clear that the specific display position of the machined pattern indicated by the numerical control machine can be the presentation of the machined pattern itself, such as the outer border of the machined pattern, or the presentation of the region where the machined pattern is located, such as the accommodation frame surrounding the machined pattern, and the surrounding frame and the image outer frame do not overlap, or the presentation of the central point of the machined pattern, including but not limited to the presentation of the machined pattern, or a part of the machined pattern.

Please refer to FIG. 27, which is a flowchart of indicating the specific display position of the machined pattern based on the relative position relationship of the mapping point and the machined pattern according to one embodiment of the present application. The embodiment of the present application provides a step S1830 of indicating the specific display position of the machined pattern based on the relative position relationship of the mapping point and the machined pattern, including:
S1831a, obtaining the coordinate information of the accommodation block corresponding to the machined pattern; and
S1832a, based on the coordinate information of the accommodation block, the light spot formed by the light beam emitted from the light source traversing each side of the accommodation block, to indicate the specific display position of the machined pattern.

The above two steps are described in detail below.

In step S1831a, the corresponding accommodation block of the machined pattern is determined based on the size of the machined pattern. The accommodation block of the machined pattern can refer to the graphs of the selected machined pattern. The shape of the accommodation block includes, but is not limited to, rectangle, triangle, polygon, and the accommodation block includes, but is not limited to, the minimum holding pattern of the machined pattern. It should be clarified that in an embodiment of the present application, the coordinate information of the accommodation block may be the coordinate information of the accommodation block in the light source coordinate system or the coordinate information of the accommodation block in the target page coordinate system.

In step S1832a, when the user directly obtains the coordinate information of the accommodation block in the light source coordinate system, the light source is driven to move according to the coordinate information of the accommodation block in the light source coordinate system, so that the light spot formed by the light beam emitted from the light source traverses all sides of the accommodation block to indicate the position of the machined pattern executed on the machined object, which is also the specific display position.

In another embodiment of the present application, when the coordinate information of the accommodation block in the target page coordinate system is obtained, and when the accommodation block is rectangular and just fits the machined pattern. The accommodation block has the number axis x and the number axis y on the target page, the maximum span of the machined pattern on the axis x and the maximum span of the machined pattern on the y axis is the length and width of the accommodation block of the machined pattern. For example, in the target page coordinate system, the coordinate information of each point is represented by (x, y), and the two farthest points of the machined pattern on the axis x are (a, b) and (m, n), then the maximum span of the machined pattern on the number axis x is | a-m | (absolute value). The two farthest points of the machined pattern on the axis y are (k, j) and (p, q), then the maximum span of the machined pattern on the number axis y is | J-Q | (absolute value). | a-m | and | j-q | are the length and width of the accommodation block of the machined pattern.

Because the accommodation block must pass through the four points (a, b), (m, n), (k, j), and (p, q), it is easy to obtain the coordinate information of the accommodation block on the target page. For example, when the number axis x and the number axis y are perpendicular to each other, according to the principle of mathematical geometry, the four vertices of the accommodation block can be (a, j), (m, j), (a, q), (m, q), respectively, and then the coordinate information of the accommodation block in the target page coordinate system can be obtained.

According to the mapping of the light source coordinate system and the target page coordinate system, and the coordinate information of the accommodation block in the target page coordinate system, the coordinate information of the accommodation block in the light source coordinate system is obtained, and then the light source is driven to move based on the coordinate information of the accommodation block in the light source coordinate system, so that the light spot formed by the light beam emitted from the light source traverses all sides of the accommodation block, to indicate which region of the machined object will the machined pattern be machined on, that is, the specific display position.

For example, the four vertices of the accommodation block are H point, I point, Z point and V point respectively, which drive the light source to move, so that the light spot moves straightly between two points in the order of H point →I point →Z point →V point → H point, to complete the return of the machining alignment.

In the embodiments of the present application, by displaying the accommodation block of the machined pattern on the machined object or the plane where the machined object is located, the user can know where the machined pattern will be machined, and then adjust it if it is not satisfied, thus reducing the error rate of machining alignment of the machined pattern.

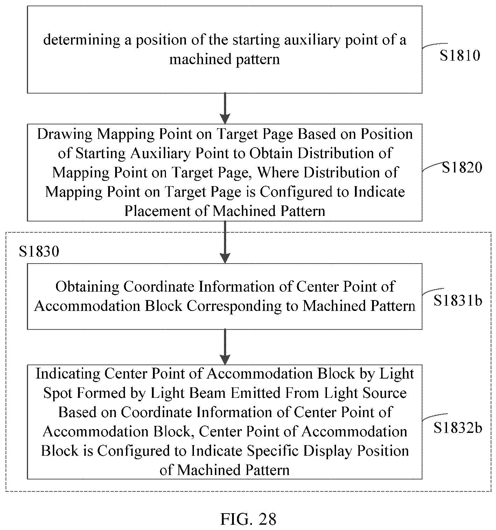

Please refer to FIG. 28, which shows a flowchart of indicating the specific display position of the machined pattern based on the relative position relationship of the mapping point and the machined pattern according to one embodiment of the present application. The embodiment of the present application provides a steps S230 of indicating the specific display position of the machined pattern based on the relative position relationship of the mapping point and the machined pattern, including:
S1831b, obtaining coordinate information of a center point of an accommodation block corresponding to the machined pattern; and
S1832b, indicating the center point of the accommodation block by the light spot formed by the light beam emitted from the light source based on the coordinate information of the center point of the accommodation block, the center point of the accommodation block is configured to indicate the specific display position of the machined pattern.

The above two steps are described in detail below.

In step S1831b, according to the size of the machined pattern, the accommodation block corresponding to the machined pattern is determined, and the coordinate information of the center point of the accommodation block is obtained. In an embodiment of the present application, the coordinate information of the center point of the accommodation block may be the coordinate information of the center point of the accommodation block in the light source coordinate system, or the coordinate information of the center point of the accommodation block in the target page coordinate system. For example, when the accommodation block is rectangular, an intersection point of diagonals of the accommodation block is taken as the center point to obtain the coordinate information of the center point of the accommodation block in the target page coordinate system.

In step S1832b, when the user directly obtains the coordinate information of the center point of the accommodation block in the light source coordinate system, the light source is driven to move based on the coordinate information of the center point of the accommodation block in the light source coordinate system, so that the light spot formed by the light beam emitted from the light source moves to the center point of the accommodation block in the light source coordinate system, to indicate which region of the machined object will the machined pattern be machined on, that is, the specific display position.

In another embodiment of the present application, when the coordinate information of the center point of the accommodation block in the target page coordinate system is obtained in step S1831b, the coordinate information of the center point of the accommodation block in the light source coordinate system is obtained based on the mapping relationship of the light source coordinate system and the target page coordinate system, and then the light source is driven to cause the light spot formed by the light source to emit the light beam. According to the coordinate information of the center point of the accommodation block in the light source coordinate system, the position of the light spot is the same as the coordinate information of the center point of the accommodation block, that is, the position of the center point of the accommodation block in the light source coordinate system is reached, to indicate which region of the machined object will the machined pattern be machined on, that is, the specific display position.

In the embodiments of the present application, the center point of the accommodation block corresponding to the machined pattern is displayed on the machined object or the plane where the machined object is located, so that the user can know where the machined pattern will be machined on, and then adjust it if it is not satisfied, thus reducing the error rate of machining alignment of the machined pattern.

The above content is mainly used to solve the problem that the alignment of the machined object is not accurate enough when the machined object is machined. However, since the light source in the present application includes the machining light source (laser emitting light source) and the alignment light source (visible light emitting light source), considering that the positions of two light sources are not uniform, the position of the machining light spot and the position of the alignment light spot may not coincide. The position information of the reference point is obtained directly from the light spot of the machining light source, and the position of the light spot cannot be directly taken as the machining position as a reference, which may cause the user to misjudge the position of the machining alignment, and the coordinate information of the mapping point obtained from the position information of the reference point cannot provide instructions for the machining light source.

In order to further improve the accuracy of the alignment, the method may also include: establishing an error compensation formula, correcting the position information of the reference point through the error compensation formula, always making the machining light spot and the alignment light spot coincide, so that the user can directly complete the machining alignment based on the reference point and the mapping point, which ensures accuracy of the machining alignment while providing convenience for the user's operation.

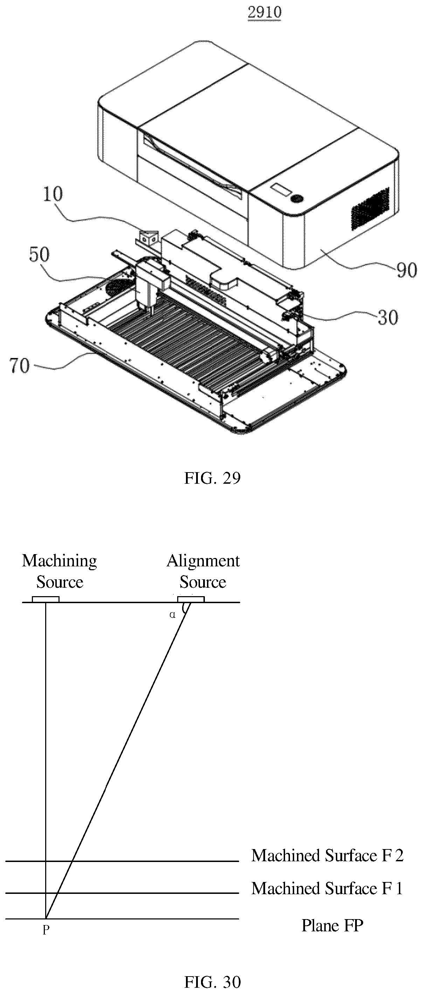

In the present application, the computer numerical control machine is a machining device, the light source is arranged on the laser head of the machining device, the laser head of the machining device can be used for machining alignment, and the laser machining on the basis of machining alignment. The laser head is provided with the laser emitting light source and the visible light emitting light source. Please refer to FIG. 29, which shows a hardware diagram of a numerical control machine according to an embodiment of the present application. In one embodiment, as shown in FIG. 29, the numerical control machine 2910 includes a housing, a movable light source 50, and a laser tube 30. The housing includes an upper housing 90 and a bottom housing 70.

In one embodiment, the light spot may be generated by the light source 50. In another embodiment, the light spot may be generated by other components such as the carbon dioxide laser tube, such as the laser tube 30 and enters into the light beam exit device through the reflector 10, and finally emits out from the light source 50 to machine the workpiece. Light sources can emit lasers, but not only emit lasers.

In one embodiment, a reflector 10 is arranged between a light source 50 and a laser tube 30, and the light beam generated by the laser tube 30 is reflected through the reflector 10 to the light source 50 and then is reflected, focused, etc., to machine the workpiece.

In one embodiment, the housing of the laser numerical control machine 100, namely, the upper housing 90 and the bottom housing 70 as shown in FIG. 29, are enclosed together to form an internal space that can contain the machined object, and the upper housing 90 and the bottom housing 70 may be either removable or fixed connections, or the upper housing 90 and the bottom housing 70 are formed integratedly. In one embodiment, the upper housing 90 is also provided with a rotating cover plate, which the operator can open or close to open or close the internal space to place or take out the workpiece.

Through the blocking and/or filtering effect of the upper housing 90 and the bottom housing 70, it can prevent the laser emitted by the light source 50 from damaging the operator due to the laser spillover when it is working.

Illustratively, in an embodiment, the internal space may also be provided with a track device and a frame. The light source 50 is mounted on the track device, and the track device may be mounted on the frame and may be moved on the frame. The track device can be X and Y axis guide rail, the X and Y axis guide rail can be used such as linear guide rail, or the optical axis and the roller cooperate the guide rail to move, only the light source 50 can be driven to move on the X and Y axis for machining, the light source 50 can also be provided with a moving track in the Z axis for moving in the Z axis for focusing before and/or during machining.

Refer to FIG. 30, which shows a schematic diagram of a machining light source and a alignment light source according to an embodiment of the present application. When the alignment light spot is used for machining alignment, the alignment light source emits a light beam at a fixed inclined angle α to form the alignment light spot on the machined surface. The machining light source emits the light beam at a fixed vertical angle to form a machining light spot on the machined surface. In the case that the alignment light source is inclined, the light beam emitted by the alignment light source and the light beam emitted by the machining light source intersect at point P, and the plane FP located at point P is the plane of the same position indicated by the machining light spot and the alignment light spot. In the actual operation process, due to the different thickness of the machined object, the height of the machined surface also changes (for example, the machined surface is F1 when the machined object is aluminum, and the machined surface is F2 when the machined object is wood), when the machined surface and the plane FP are not at the same height, there is a certain distance between the alignment light spot and the machining light spot on the machined surface.

This embodiment obtains the same position information of the alignment light spot as the position information of the machining light spot by compensating the error of the light spot, so that the position information of the alignment light spot can be directly used as a reference when the subsequent machined object is machined.

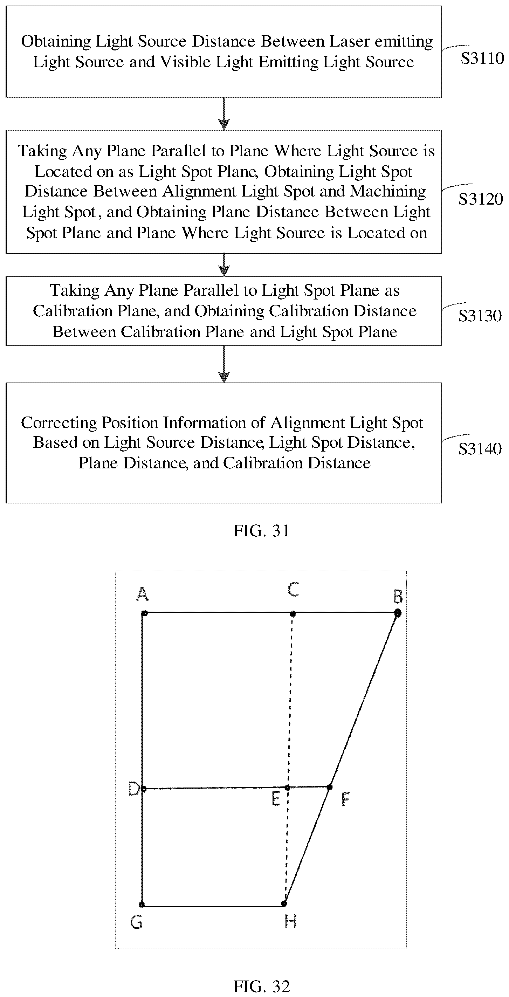

Specifically, please refer to FIG. 31, which shows a flowchart for constructing an error compensation formula according to an embodiment of the present application. The embodiment of the present application provides a steps of constructing an error compensation formula, including:
Step S3110, obtaining a light source distance between the laser emitting light source and the visible light emitting light source;
Step S3120, taking any plane parallel to a plane where the light source is located on as a light spot plane, obtaining a light spot distance between the alignment light spot and the machining light spot, and obtaining a plane distance between the light spot plane and the plane where the light source is located on;
Step S3130, taking any plane parallel to the light spot plane as a calibration plane, and obtaining a calibration distance between the calibration plane and the light spot plane; and
Step S3140, correcting the position information of the alignment light spot based on the light source distance, the light spot distance, the plane distance, and the calibration distance.

The above four steps are described in detail below.

Since the distance between the machining light source and the alignment light source, and the inclined angle of the alignment light source are different in each machining device, the error compensation formula is first constructed for each used machining device.

In step S3110, specifically, please refer to FIG. 32, which shows a schematic diagram of the machining light spot not being overlapped with the alignment light spot according to an embodiment of the present application. The point A represents the position of the machining light source, the point B represents the position of the alignment light source, and the line segment AB represents the distance between the machining light source and the alignment light source. The plane where line segment GH is located is the plane selected during the adjustment of the machining device. The point G is the machining light spot when the machining device is adjusted, and the H point is the alignment light spot when the machining device is adjusted. The plane where line segment DF is located is the machined surface during the actual operation of the machining device. The point D is the machining light spot in actual use, and the point F is the alignment light spot in actual use.

The distance between the alignment light source and the machining light source is obtained as the light source distance. The light source distance can be determined based on the distance sensor between the alignment light source and the machining light source. The light source distance can also be determined based on user input. The light source distance is also the line segment AB in FIG. 32.

In step S3120, any plane parallel to a plane where the light source is located is the light spot plane. The machining light spot and the alignment light spot are irradiated on the light spot plane, respectively, and the distance between these two spots is the light spot distance, such as the line segment GH in FIG. 32. After the light spot plane is determined, the distance between the light spot plane and the plane where the light source is obtained is the plane distance, such as the line segment AG or CH in FIG. 32.

In step S3130, any plane parallel to the light spot plane is taken as the calibration plane. It should be clear that the light spot plane is not overlapped with the calibration plane, such as the plane represented by DF in FIG. 32 is the calibration plane. The distance between the calibration plane and the plane where the light spot is obtained is the calibration distance. This is the line segment DG or EH in FIG. 32.

In step S3120, any plane parallel to the plane where the light source is located is the light spot plane. The machining light spot and the alignment light spot are irradiated on the light spot plane respectively, and the distance between these two spots is the light spot distance, such as the line segment GH in FIG. 4. After the light spot plane is determined, the distance between the light spot plane and the plane where the light source is located is the plane distance, such as the line segment AG or CH in FIG. 32.

In step S3130, any plane parallel to the light spot plane is taken as the calibration plane. It should be clear that the calibration plane is not overlapped with the light spot plane, such as the plane represented by DF in FIG. 32 is the calibration plane. The distance between the calibration plane and the plane where the light spot is located is the calibration distance, such as the line segment DG or EH in FIG. 32.

In step S3140, it can be seen from FIG. 32 that the offset distance between the alignment light spot and the machining light spot is DF, that is, DF can be calculated according to the above conditions. Specifically, DF can be calculated in the following way.

It is known that the lengths of line segment AB, line segment GH and line segment AG are invariants of the current attitude of the machining device. Since the calibration distance has different lengths according to different machined objects, the line segment DG or AD, CE or EH is regarded as the calibration distance and taken as the independent variable. DF is the dependent variable. Based on the above content, the error compensation formula is constructed. After the error compensation formula is constructed, the error compensation can be determined according to the calibration distance and the alignment light spot can be adjusted.
(1) BC=AB-GH, EH=AG-AD.
(2) According to the similarity between the triangle EFH and the triangle CBH, EF/BC=EH/CH is derived from EF=(BC ×EH)/CH.
(3) DF=DE+EF, because DE=GH, so DF=GH+EF.

In summary, DF=GH+(BC ×EH)/CH=GH+[(AB-GH) ×(EH))]/CH, GH is the light spot distance, AB is the light source distance, CH is the plane distance, and EH is the calibration distance.

The length of line segment DF can be obtained through the above correspondence, and the length of line segment DF is the error compensation for the position information of the alignment light spot. Combined with the position information of the alignment light spot, the position information of the alignment light spot can be the same as that of the machining light spot.

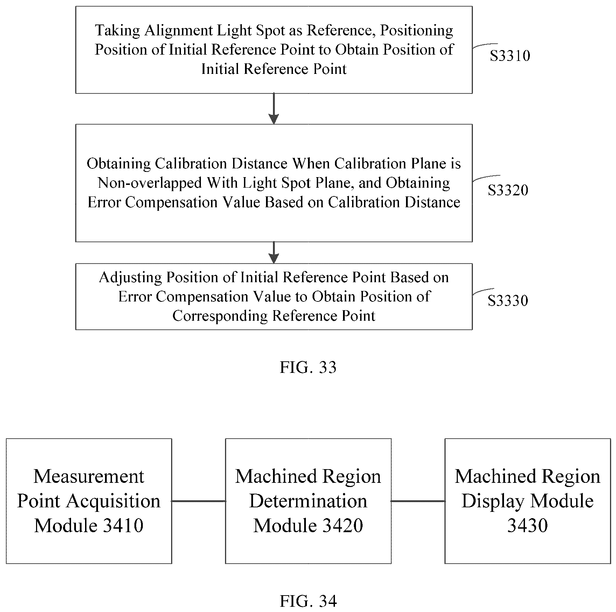

Please refer to FIG. 33, which shows a flowchart of compensating the error of the alignment light spot according to an embodiment of the present application. The embodiments of the present application provide a method for compensating the error of the alignment light spot, including:
Step S3310, taking the alignment light spot as a reference, positioning a position of an initial reference point to obtain the position of the initial reference point;
Step S3320, obtaining the calibration distance when the calibration plane is non-overlapped with the light spot plane, and obtaining an error compensation value based on the calibration distance; and
Step S3330, adjusting the position of the initial reference point based on the error compensation value to obtain a position of a corresponding reference point.

The above three steps are described in detail below.

In step S3310, taking the alignment light spot as a reference, the position of the initial reference point is located and the position information of the initial reference point is obtained. That is, in the embodiment of the present application, the position of the initial reference point is determined by taking the alignment light spot displayed on the machined object. Considering that the machining light spot and the alignment light spot may not coincide in the current machining alignment plane, thus the initial reference point is determined by taking the position of the alignment light spot as the reference coordinate point, and the position information of the initial reference point is determined.

In step S3320, if the calibration plane is not overlapped with the light spot plane, then the error compensation is calculated, so the calibration distance is obtained, and the calibration distance is substituted into the error compensation formula to obtain the error compensation value.

In another embodiment of the present application, if the calibration plane is overlapped with the light spot plane, the light spot distance is directly used as the error compensation value.

In step S3330, the position information of the initial reference point is modified according to the error compensation value to obtain the position information of the corresponding reference point. The position information of the light spot can also be adjusted according to the error compensation value, to obtain the position information of the corrected light spot. Finally, the position information of the corresponding reference point can be directly determined according to the position information of the corrected light spot.

It should be clear that the initial reference point includes the initial first reference point and the initial second reference point, the initial first reference point is the uncompensated version of the starting auxiliary point, and the initial second reference point is the uncompensated version of the mapping point, that is, in the embodiment of the present application, whether the starting auxiliary point or the mapping point is obtained, the corresponding initial reference point must be obtained first (i.e. initial first reference point or initial second reference point), and then the error compensation value is obtained to get the corresponding reference point (starting auxiliary point or mapping point). In this way, the position information of the starting auxiliary point and the mapping point is the same as that of the machining light spot.

In another embodiment of the present application, the angle of the alignment light source can also be adjusted according to the error compensation value, so that the alignment light spot moves to the position that the machining light spot should display, to ensure that the alignment light spot and the machining light spot are always consistent. After completing the machining alignment of the machined object, the alignment light source can be restored to the original position, which makes the error compensation formula also be used in the next machined object, just re-determining the calibration distance is enough, and then in the machining alignment of any machined object, it can ensure that the machining light spot and the alignment light spot coincide. It needs to be further clarified that when the alignment light source is used for machining alignment, the machining light source does not emit a light beam to form a light spot.

In the embodiment of the present application, when the light source of the machining device is divided into the machining light source and the alignment light source, the machining light spot and the alignment light spot do not coincide. The present application always makes the machining light spot and the alignment light spot coincide by constructing and applying the error compensation formula, so that the user can directly complete the machining alignment according to the starting auxiliary point and the mapping point, while ensuring the accuracy of the machining alignment, it provides convenience for users to operate.

It should be clear that for the positioning of reference points used in machining alignment, the light source is first driven to move, so that the light beam emitted from the light source is illuminated to the starting auxiliary point, to form the light spot at the starting auxiliary point. Then the position information of the starting auxiliary point is obtained according to the position information of the light spot. The reference point refers to the selected point on the machined object, or on the surface where the machined object is located. The reference point can be the starting point to machine the machined object, or any other point. The reference point provides a reference for the placement of the machined pattern.

It should be understood that in an embodiment of the present application, the light source may be the laser emitting light source. The laser head emits light beams to form light spots, which are then used to mark the illumination position of the light beam. The light source can also be another light source configured separately for emitting light beam for machining alignment to form a light spot. The "machined surface" can be a plane or a surface, which is not limited herein.

It should be further clarified that in another embodiment of the present application, for the movement of the light source, the light source can be controlled to move to a specified position according to the instruction information, so that the light spot is located at the starting auxiliary point. In addition, the light source can also be moved under the user's drag, which is not limited here. The instruction information is generated by the operation action initiated by the user in the host computer composed of the control panel or terminal device of the machining device.

The present application also provides a computer numerical control machine, which may be a laser machining device configured to machine the machined material, including:
a removable head and a light emitting assembly, the removable head is configured to move to machine the surface of the machined material, and to emit the positioning light spot, the removable head may include a laser head, a knife cutting head, a plasma cutting head, a water gun head, a drill, a pen head, etc., which is not uniquely limited herein. The removable head is used for moving to machine the surface of the machined material, and the removable head can be glibly arranged on the slide rail;
a communication component is configured to receive the machining file, which can be gcode or any other form of file, and the machining file is generated according to the machined region obtained by the above method, and is configured to receive a signal corresponding to the specific display position;
a controller is configured to control the machining of the movable head to the machined material based on the machining file, and control the light emitting assembly to indicate the specific display position based on the signal corresponding to the specific display position.

The present application also provides a computing system, including at least one computer numerical control machine and at least one processor;
the processor is configured to perform the above method, and the processor can be the processor of the host computer or the processor in the computer numerical control machine, which is not limited here;
based on the machined region obtained by the processor, the numerical control machine transmits electromagnetic energy to the machined material arranged inside the numerical control machine; and based on the specific display position of the machined pattern, transmits electromagnetic energy to the machined object arranged inside the computer numerical control machine.

Please refer to FIG. 34, according to the embodiment of the present application, a measurement device for a machined region is provided in FIG. 34, which includes a measurement point acquisition module 3410, a machined region determination module 3420 and a machined region display module 3430.

The measurement point acquisition module 3410 is configured to obtain a coordinate of at least one measurement point corresponding to the target position on the surface of the machined material.

The machined region determination module 3420 is configured to determine the machined region based on the coordinate of the at least one measurement point .

The machined region display module 3430 is configured to control the target page to display the machined region.

It should be noted that the measurement device of the machined region provided by the above embodiment belongs to the same idea as the method of measuring the machined region provided by the above embodiment, and the specific mode of each module and unit to perform the operation has been described in detail in the method embodiment and will not be repeated here.

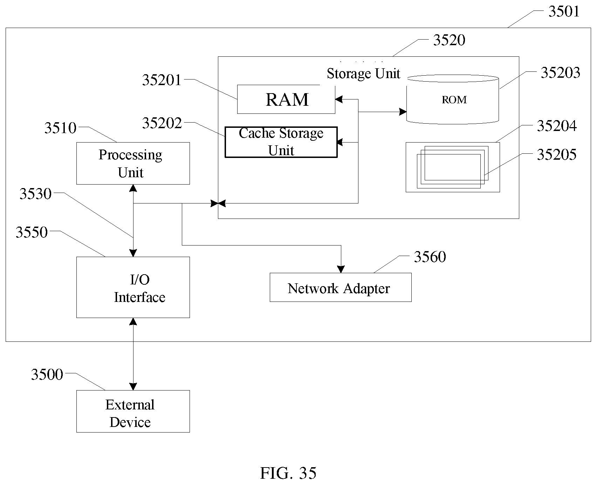

In an exemplary embodiment, the method of measuring the machined region of the embodiment of the present application may be implemented by the measurement device in the machined region shown in FIG. 35. Refer to FIG. 35 below to describe the measurement device in the machined region according to the embodiments of the present application. The measurement device in the machined region shown in FIG. 35 is only an example and should not impose any limitation on the functionality and scope of use of the embodiment of the present application.

As shown in FIG. 35, the measurement device in the machined region is represented in the form of a universal computing device.

The components of the measurement device in the machined region may include, but are not limited to, at least one the processing unit 3510, at least one the storage unit 3520, and a bus 3530 connecting different system components (including a storage unit 3520 and a processing unit 3510).

The storage unit stores the program code, which can be executed by the processing unit 3510 to cause the processing unit 3510 to perform the steps described in the description section of the above exemplary method in accordance with the various exemplary embodiments of the present application. For example, the processing unit 3510 can perform the steps shown in FIGS. 2 and 18.

The storage unit 3520 may include readable medium in the form of a volatile storage unit, such as a random access storage unit (RAM) 35201 and/or a cache storage unit 35202, and may further include a read-only storage unit (ROM) 35203.

The storage unit 3520 may also include a program/utility 35204 having a set (at least one) of program modules 35205, such program modules 35205 including but not limited to: operation systems, one or more applications, other program modules, and program data, each or some combination of these examples may include an implementation of a network environment.

The bus 3530 may represent one or more of several classes of bus structures, including a memory unit bus or a memory unit controller, a peripheral bus, a graphics acceleration port, a processing unit, or a local bus using any of several bus structures.

The measurement device in the machined region may also communicate with one or more external devices 3500 (e.g. keyboard, pointing device, Bluetooth device, etc.), and with one or more devices that enable the user to interact with the measurement device in the machined region, and/or communicate with any device (e.g. router, modem, etc.) that enables the measurement device in the machined region to communicate with one or more other computing devices. This communication can take place through the input/output (I/O) interface 3550. Moreover, the measurement device in the machined region can also communicate with one or more networks (e.g. local area network (LAN), wide area network (WAN) and/or public network (e.g. Internet) via a network adapter 3560. As shown in the figures, the network adapter 3560 communicates with other modules of the measurement device in the machined region through the bus 3530. It should be understood that, although not shown in the figure, other hardware and/or software modules may be used in conjunction with the measurement device in the machined region, including but not limited to: microcode, device drives, redundant machining units, external disk drive arrays, RAID systems, tape drives, and data backup storage systems.

The above description of embodiments is easy for those skilled in the art to understand, and the example embodiments described herein may be implemented by software, or by software in combination with necessary hardware. Therefore, the technical solution according to the embodiment of the present application may be embodied in the form of a software product that may be stored on a non-volatile storage medium (which may be CD-ROM, USB flash drive, portable hard drive, etc.) or on a network, including instructions to cause a computing device (which may be a personal computer, a server, a terminal device, or a network device, etc.) to execute a method according to the implementation of the present application.

The above description of embodiments is easy for those skilled in the art to understand, and the example embodiments described herein may be implemented by software, or by software in combination with necessary hardware. Therefore, the technical solution according to the embodiment of the present application may be embodied in the form of a software product that may be stored on a non-volatile storage medium (which may be CD-ROM, USB flash drive, portable hard drive, etc.) or on a network, including instructions to cause a computing device (which may be a personal computer, a server, a terminal device, or a network device, etc.) to execute a method according to the implementation of the present application.

In the exemplary embodiment of the present application, a computer-readable storage medium is also provided on which a computer-readable instruction is stored, and when the computer-readable instruction is executed by the processor of the computer, the computer executes the method described in the above embodiments.

According to an embodiment of the present application, a program product for implementing the method in the method embodiment is also provided, which may adopt a portable compact disk read-only memory (CD-ROM) and include the program code, and may be run on a terminal device, such as a personal computer. In this document, the readable storage medium may be any tangible medium containing or storing a program that may be used by or in combination with an instruction execution system, device or component.

The program product may adopt any combination of one or more readable medium. The readable medium can be a readable signal medium or a readable storage medium. For example, a system, device or component that may be, but is not limited to, electrical, magnetic, optical, electromagnetic, infrared, or semiconductor, or any combination of the above. More specific examples of readable storage medium (a non-exhaustive list) include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical memory device, a magnetic memory device, or any suitable combination of the above.

A computer-readable signal medium may include a data signal propagated in a baseband or as part of a carrier that carries a readable program code. Such transmitted data signals may take many forms, including but not limited to electromagnetic signals, optical signals, or any suitable combination of the above. A readable signal medium may also be any readable medium other than a readable storage medium which may transmit, propagate or transmit a program intended for use by or in combination with an instruction execution system, device or component.

The program code contained on the readable medium may be transmitted in any appropriate medium, including but not limited to wireless, wired, fiber optic, RF, etc., or any suitable combination of the above.

Program code for performing the operations of the present application may be written in any combination of one or more programming languages, including object-oriented programming languages such as Java, C++, etc., and conventional procedural programming languages, such as the "C" language or similar programming languages. The program code may be executed entirely on the user computing device, partly on the user computing device, as a stand-alone package, partly on the user computing device, partly on the remote computing device, or entirely on the remote computing device or server. In the case of a remote computing device, the remote computing device may be connected to the user computing device over any kind of network, including a local area network (LAN) or wide area network (WAN), or it may be connected to an external computing device (for example, using an Internet service provider to connect over the Internet).

It should be noted that although several modules or units of device for the execution of actions are mentioned in the detailed description above, this division is not mandatory. In fact, depending on the embodiment of the present application, the features and functions of two or more modules or units described above may be embodied in a single module or unit. Conversely, the features and functions of a module or unit described above can also be divided into multiple modules or units to be specific.

In addition, although the steps of the methods in the present application are described in a particular order in the attached drawings, this does not require or imply that the steps must be performed in that particular order, or that all of the shown steps must be performed to achieve the desired result. Optionally, some steps can be omitted, multiple steps can be combined into a single step, and/or a step can be broken down into multiple steps.

The above description of embodiments is easy for those skilled in the art to understand, and the example embodiments described herein may be implemented by software, or by software in combination with necessary hardware. Therefore, the technical solution according to the present embodiment may be embodied in the form of a software product that may be stored on a non-volatile storage medium (which may be a CD-ROM, a USB flash drive, a portable hard drive, etc.) or on a network. Includes instructions to cause a computing device (which may be a personal computer, server, mobile terminal, or network device, etc.) to execute a method according to the present embodiment.

Those skilled in the art, after considering the specification and practicing the invention disclosed herein, will readily think of other embodiments of the present application. the present application is intended to cover any variation, use, or adaptation of the present application that follows the general principles of the present application and includes common knowledge or customary technical means in the art that are not disclosed in the present application. The specification and embodiments are to be considered exemplary only, the true scope and spirit of the present application are indicated by the claims attached.

## Claims

1. A method of measuring a machined region, **characterized by** comprising:
obtaining a coordinate of at least one measurement point, wherein the coordinate of the at least one measurement point corresponds to a target position on a surface of a machined material;
determining a machined region based on the coordinate of the at least one measurement point; and
controlling a target page to display the machined region.

2. The method according to claim 1, wherein before obtaining the coordinate of the at least one measurement point, wherein the coordinate of the at least one measurement point corresponds to the target position on the surface of the machined material, the method further comprises:
driving a movable head in a computer numerical control machine, wherein the movable head is configured to move to machine the surface of machined material, and configured to eject a positioning light spot; and
corresponding the positioning light spot to the target position on the surface of the machined material.

3. The method according to claim 1, wherein determining the machined region based on the coordinate of the at least one measurement point comprises:
determining at least one line segment based on coordinates of more than two measurement points; and
determining the machined region based on the at least one line segment.

4. The method according to claim 3, wherein determining the at least one line segment based on the coordinates of more than two measurement points comprises:
determining a first vertex and a second vertex based on a first measurement point and a second measurement point; and
connecting the first vertex to the first measurement point and the second measurement point, and connecting the second vertex to the first measurement point and the second measurement point.

5. The method according to claim 4, wherein determining the first vertex and the second vertex based on the first measurement point and the second measurement point comprises:
determining a smallest horizontal coordinate in horizontal coordinates of the first measurement point and the second measurement point as a horizontal coordinate of the first vertex, and determining a biggest horizontal coordinate in the horizontal coordinates of the first measurement point and the second measurement point as a horizontal coordinate of the second vertex; and
determining a smallest longitudinal coordinate in longitudinal coordinates of the first measurement point and the second measurement point as a longitudinal coordinate of the first vertex, and determining a biggest longitudinal coordinate in the longitudinal coordinates of the first measurement point and the second measurement point as a longitudinal coordinate of the second vertex.

6. The method according to claim 3, wherein determining the at least one line segment based on coordinates of more than two measurement points comprises:
storing the coordinates of more than two measurement points to a storage queue; and
sequentially connecting two or more measurement points to obtain the at least one line segment based on orders of entry of the coordinates of more than two measurement points into the storage queue.

7. The method according to claim 3 or 6, wherein the at least one line segment comprises a straight line segment and/or a curved line segment.

8. The method according to claim 1, wherein controlling the target page to display the machined region comprises:
setting up a coordinate system on the target page to obtain a coordinate range of the machined region under the coordinate system; and
adding a logo to the target page to distinguish the machined region from the target page.

9. The method according to claim 1, wherein obtaining the coordinate of the at least one measurement point, comprises:
deleting a coordinate of a measurement point corresponding to the first operation instruction based on the first operation instruction.

10. The method according to claim 1, wherein obtaining the coordinate of the at least one measurement point comprises:
obtaining a coordinate of at least one new measurement point based on a second operation instruction.

11. The method according to claim 1, further comprising two or more machined regions, wherein determining the machined region based on the coordinate of the at least one measurement point comprises:
determining a first machined region based on the coordinate of the at least one measurement point;
displaying the first machined region on a preview page;
determining a second machined region based on the coordinate of the at least one measurement point; and
displaying the second machined region on the preview page.

12. The method according to claim 11, wherein controlling the target page to display the machined region comprises:
displaying a region corresponding to the first machined region and a region corresponding to the second machined region on the target page based on relative position relationships of the first machined region and the second machined region on the preview page.

13. The method according to claim 11, wherein the preview page is suspended over the target page, a brightness of the preview page is not lower than a brightness of the target page, and the preview page comprises a first display region and/or a second display region;
wherein the first display region displays at least one graph, and each graph corresponds to a shape of a region that a user intends to machine;
wherein the second display region displays at least one marker point, and each marker point is a point on the preview page mapped by the coordinate of the measurement point based on a coordinate mapping relationship.

14. The method according to claim 1, wherein the method is applied to a computer numerical control machine or an intelligent device communicated to the computer numerical control machine, wherein the computer numerical control machine comprises a moveable head, the moveable head comprises a machining member and a positioning member, and the machining member and the positioning member are mounted at different positions of the moveable head;
wherein the method further comprises:
determining a first movement region corresponding to the machining member and a second movement region corresponding to the positioning member based on a movable range of the movable head;
determining a limitation region on the target page based on the first movement region and the second movement region; and
generating a corresponding prompt message when the machined region is overlapped with the limitation region.

15. The method according to any one of claims 1 to 14, wherein after controlling the target page to display the machined region, the method further comprises:
determining a position of a starting auxiliary point of a machined pattern; and
drawing a mapping point on the target page based on the position of the starting auxiliary point to obtain a distribution of the mapping point on the target page, wherein the distribution of the mapping point on the target page is configured to indicate a placement of the machined pattern; and
indicating a specific display position of the machined pattern based on a relative position relationship of the mapping point and the machined pattern.

16. The method according to claim 15, wherein determining the position of the starting auxiliary point of the machined pattern comprises:
extracting a moving distance of a light source to obtain position information of the light source; and
obtaining the position of the starting auxiliary point based on the position information of the light source.

17. The method according to claim 16, wherein obtaining the position of the starting auxiliary point based on the position information of the light source comprises:
synchronously displaying a position of a light spot mapped to the target page based on the position information of the light source; and
determining the position of the starting auxiliary point in response to a target instruction.

18. The method according to claim 15, wherein the mapping point comprises a secondary mapping point, after drawing the mapping point on the target page based on the position of the starting auxiliary point to obtain the distribution of the mapping point on the target page, the method further comprises:
driving a light source to irradiate to any point other than the starting auxiliary point, wherein the any point other than the starting auxiliary point is a secondary auxiliary point; and
drawing a mapping point displayed on the target page mapped synchronously by the secondary auxiliary point, wherein the mapping point corresponding to the secondary auxiliary point is the secondary mapping point, and the mapping point is configured to obtain the target page where more than two mapping points are distributed on.

19. The method according to claim 18, wherein a mapping point corresponding to the starting auxiliary point is a starting mapping point, and the mapping point comprises the starting mapping point, wherein after drawing the mapping point displayed on the target page mapped synchronously by the secondary auxiliary point, the method further comprises:
drawing a mapping line segment in a direction from the starting mapping point as a starting point to any one secondary mapping point, wherein the mapping line segment formed by mapping points distributed on the target page is configured to indicate placement of the machined pattern.

20. The method according to claim 19, wherein after drawing the mapping line segment in the direction from the starting mapping point as a starting point to any one secondary mapping point, the method further comprises:
drawing a rectangle with the mapping line segment as a diagonal; and
placing the machined pattern in the rectangle in response to a manipulation action by a user.

21. The method according to claim 18, wherein after drawing the mapping line segment in the direction from the starting mapping point as the starting point to any one secondary mapping point, the method further comprises:
connecting more than two mapping points, taking mapping line segments, formed by connecting more than two mapping points, as a part of a graph to form a mapping graph, wherein the mapping graph formed by the mapping points distributed on the target page is configured to place the machined pattern.

22. The method according to claims 15 or 18 or 19, wherein after drawing the mapping point on the target page based on the position of the starting auxiliary point to obtain the distribution of the mapping point on the target page, the method further comprises:
counting a number of the mapping points; and
when the number of the mapping points exceeds a preset number threshold, deleting mapping points with a leading chronological order based on formation time of the mapping points.

23. The method according to claim 15, wherein indicating the specific display position of the machined pattern based on the relative position relationship of the mapping point and the machined pattern comprises:
obtaining coordinate information of an accommodation block corresponding to the machined pattern; and
traversing each side of the accommodation block by a light spot that is formed by a light beam emitted from the light source based on the coordinate information of the accommodation block, to indicate the specific display position of the machined pattern.

24. The method according to claim 15, wherein indicating the specific display position of the machined pattern based on the relative position relationship of the mapping point and the machined pattern comprises:
obtaining coordinate information of a center point of an accommodation block corresponding to the machined pattern; and
indicating the center point of the accommodation block by a light spot formed by a light beam emitted from the light source based on the coordinate information of the center point of the accommodation block, wherein the center point of the accommodation block is configured to indicate the specific display position of the machined pattern.

25. The method according to any one of claims 16 to 24, wherein the light source comprises a laser emitting light source and a visible light emitting light source.

26. The method according to claim 25, wherein the visible light emitting light source emits an alignment light spot at a fixed tilt angle and the laser emitting light source emits a machining light spot;
before determining the position of the starting auxiliary point of the machined pattern, the method further comprises:
obtaining a light source distance between the laser emitting light source and the visible light emitting light source;
taking any plane parallel to a plane where the light source is located on as a light spot plane, obtaining a light spot distance between the alignment light spot and the machining light spot, and obtaining a plane distance between the light spot plane and the plane where the light source is located on;
taking any plane parallel to the light spot plane as a calibration plane, and obtaining a calibration distance between the calibration plane and the light spot plane; and
correcting the position information of the alignment light spot based on the light source distance, the light spot distance, the plane distance, and the calibration distance.

27. The method according to claim 26, wherein the light spot formed by the light beam emitted from the light source is the alignment light spot, wherein before indicating the specific display position of the machined pattern based on the relative position relationship of the mapping point and the machined pattern, the method further comprises:
taking the alignment light spot as a reference, positioning a position of an initial reference point to obtain the position of the initial reference point;
obtaining the calibration distance when the calibration plane is non-overlapped with the light spot plane, and obtaining an error compensation value based on the calibration distance; and
adjusting the position of the initial reference point based on the error compensation value to obtain a position of a corresponding reference point.

28. The method according to claim 27, wherein taking the alignment light spot as the reference, positioning the position of the initial reference point to obtain the position of the initial reference point, the method further comprises:
when the alignment plane is overlapped with the light spot plane, adjusting the position of the initial reference point by taking the light spot distance as the error compensation value to obtain the position of the corresponding reference point.

29. A computer numerical control machine, **characterized by** comprising:
a movable head and a light emitting assembly;
a communication assembly, configured to receive a machining file, wherein the machining file is generated based on the machined region obtained by the method as claimed in any one of claims 1-14; and configured to receive a signal corresponding to the specific display position obtained by the method as claimed in any one of claims 15-28; and
a controller, configured to control the movable head to machine material based on the machining file, and control the light emitting assembly to emit light to indicate the specific display position based on the signal corresponding to the specific display position.

30. A computing system, **characterized by** comprising at least one computer numerical control machine and at least one processor;
wherein the processor is configured to perform the method as claimed in any one of claims 1-28;
the computer numerical control machine is configured to transmit electromagnetic energy to machined material arranged inside the computer numerical control machine based on the machined region obtained by the processor, and transmit the electromagnetic energy to a machined object arranged inside the computer numerical control machine based on the specific display position of the machined pattern.

31. A computer-readable storage medium, on which computer-readable instructions are stored, wherein the computer-readable instructions, when executed by a processor of a computer, cause the computer to perform the method as claimed in any one of claims 1-28.
